(19) Europäisches Patentamt
European Patent Office
Office européen des brevets

(11) EP 1 965 275 A1

(12) EUROPEAN PATENT APPLICATION
published in accordance with Art. 158(3) EPC

(43) Date of publication:
**03.09.2008 Bulletin 2008/36**

(21) Application number: **06835043.8**

(22) Date of filing: **20.12.2006**

(51) Int Cl.:
***G03H 1/02*** (2006.01) ***G03H 1/22*** (2006.01)
***G11B 7/0065*** (2006.01) ***G11B 7/24*** (2006.01)

(86) International application number:
**PCT/JP2006/325423**

(87) International publication number:
**WO 2007/072882 (28.06.2007 Gazette 2007/26)**

(84) Designated Contracting States:
**DE FR GB**

(30) Priority: **22.12.2005 JP 2005370661**

(71) Applicant: **FUJIFILM Corporation**
**Minato-ku**
**Tokyo 106-8620 (JP)**

(72) Inventors:
- **USAMI, Yoshihisa**
  **Ashigarakami-gun, Kanagawa 258-8577 (JP)**
- **YUMOTO, Masatoshi**
  **Fujinomiya-shi, Shizuoka 4188666 (JP)**
- **YANAGIHARA, Naoto**
  **Minami-Ashigara-shi, Kanagawa 250-0193 (JP)**

(74) Representative: **Grünecker, Kinkeldey,**
**Stockmair & Schwanhäusser**
**Anwaltssozietät**
**Leopoldstrasse 4**
**80802 München (DE)**

# (54) OPTICAL RECORDING MEDIUM, OPTICAL RECORDING DEVICE, OPTICAL RECORDING METHOD, AND OPTICAL REPRODUCTION METHOD

(57) The present invention aims to provide an optical recording medium that is provided with a recording layer for recording information by holography, has an uncomplicated laminate structure, is capable of performing recording and reproducing control such as tracking control and is capable of high-density multiple recording, as well as an optical recording method, an optical recording apparatus and an optical reproducing method. To this end, the present invention provides an optical recording medium which is a transmission medium for recording information based on a holographic principle using an information beam and a reference beam and performing tracking control using a servo beam, the medium including at least a first substrate, a recording layer, a filter layer that selectively reflects the servo beam, and a second substrate being disposed in this order as viewed from the light irradiation side of the information beam and the reference beam.

FIG. 1

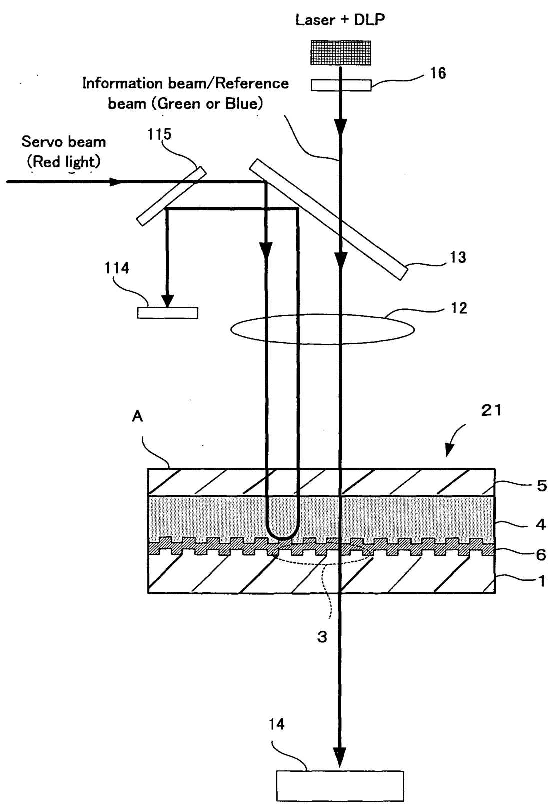


EP 1 965 275 A1

## Description

### Technical Field

The present invention relates to a transmission optical recording medium that is provided with a recording layer for recording information by holography, is capable of performing recording and reproducing control such as tracking control and has an uncomplicated laminate structure, and also relates to an optical recording apparatus, an optical recording method and an optical reproducing method.

### Background Art

An optical recording medium is exemplified as one of recording media in which information in large volume such as high-density image data can be written. As this type of optical recording medium, for example, rewritable optical recording media such as optical magnetic discs and phase change optical discs, and write-once type optical recording media such as CD-R have been put in practical use, however, requests for further enlarging the capacity of the optical recording media are going on increasing. However, all of the conventionally proposed optical recording media are based on two dimensional recording, and increasing of recording capacity has been limited. Thus, in recent years, holographic optical recording media capable of recording information in a three dimensional manner attract a lot of attention.

In the holographic optical recording medium, information is recorded generally by overlapping an information beam to which a two dimensional intensity distribution has been given with a reference beam having an almost same intensity as the information beam inside a photosensitive recording layer and producing a distribution of optical characteristics such as refractive index inside the recording layer by utilizing an interference pattern formed by the beams. Meanwhile, when the written information is read out (reproduced), only the reference beam is irradiated to the recording layer in the same arrangement as when recorded, and a diffracted beam having an intensity distribution commensurate with the optical characteristic distribution inside the recording layer is emitted from the recording layer.

In this holographic optical recording medium, the optical characteristic distribution is formed three-dimensionally in the recording layer. Thus, it is possible to partially overlap a region in which information has been written by one information beam with a region in which information has been written by another information beam, i.e., multiple recording is possible. When using digital volume holography synthesized by computer, a signal to noise ratio (S/N ratio) at one spot is extremely high. Thus, even when the S/N ratio is slightly reduced by overwriting, the original information can be faithfully reproduced. As a result, the multiple recording can be performed several hundred times, and recording capacity of optical recording media can be remarkably increased (see Patent Literature 1).

As such a holographic optical recording medium, for example, as shown in FIG. 9, an optical recording medium 20 is conventionally known in which a first substrate 5, a recording layer 4, a quarter-wave plate 7 or a second gap layer 7, a filter layer 6 composed of a cholesteric liquid crystal layer or dichroic mirror layer, a gap layer 8 for smoothing a second substrate 1 and the second substrate in which a reflective film 2 is deposited on a surface having a servo pit pattern (see Patent Literature 3 and Non-Patent Literature 1). With such a layer structure, when a servo beam used for focus servo control and tracking servo control is irradiated to the optical recording medium 20, the servo beam is transmissive through the first substrate 5, the recording layer 4, the quarter-wave plate 7 or second gap layer 7 and the filter layer 6, is reflected at the surface of the reflective film 2 to be incident on a photodetector as a returned beam, and thus it is possible to detect track information and address information. Meanwhile, when an information beam and a reference beam for recording is irradiated to the optical recording medium 20, the beams are transmissive through the first substrate 5, form an interference image on the recording layer 4, record the interference image in the recording layer 4 and then is reflected at the surface of the filter layer 6 to become a reflected beam.

As described above, the filter layer 6 functions as a wavelength-selective reflective layer that selectively reflects specific wavelengths and is formed so as to be transparent to the servo beam but reflect the information beam and the reference beam. To efficiently exert the function of selectively reflecting wavelengths, the second gap layer 8 is laminated on the filter layer 6.

However, such a transmission optical recording medium 20 requires forming the reflective film 2 and the first gap layer 8 between the second substrate 1 and the recording layer 4, which causes problems with an increase in thickness of the optical recording medium and a complicated layer structure. In the meanwhile, a transmission optical recording medium with two-beam interference exposure (see Patent Literature 2 to Patent Literature 3) is generally composed of a first substrate, a recording layer and a second substrate and has an advantage in that the layer structure is not complicated, however, does not have a tracking unit to avoid diffraction caused by pits and a groove for the purpose of reading holographic signal beam with high accuracy. Therefore, the optical recording medium has problems that recording and reproducing of the optical recording medium depends on the mechanical accuracy of the optical reproducing apparatus used, there is a limitation in the accuracy of recording and reproducing, and it is difficult to even-out variations in recording position of the optical recording medium and dimension error of the optical recording medium itself.

Therefore, there has not been realized an optical recording medium that is provided with a recording layer for recording information by holography, has an uncomplicated laminate structure, is capable of performing recording and reproducing control such as tracking control and capable of high-density multiple recording. It has been desired to promptly provide such an optical recording medium.

Patent Literature 1 Japanese Patent Application Laid-Open (JP-A) No. 2002-123949
Patent Literature 2 Japanese Patent Application Laid-Open (JP-A) No. 2004-177958
Patent Literature 3 Japanese Patent Application Laid-Open (JP-A) No. 2005-502918
Non-Patent Literature 1 "Nikkei Electronics" issued on 17th January 2005 at pp. 105-114

Disclosure of Invention

The present invention aims to solve prior art problems and achieve the following objects. More specifically, the objects of the present invention are to provide an optical recording medium that is provided with a recording layer for recording information by holography, has an uncomplicated laminate structure, is capable of performing recording and reproducing control such as tracking control and capable of high-multiple recording, and to provide an optical recording method for use in the optical recording medium, an optical recording apparatus and an optical reproducing method.
Means to solve the aforesaid problems are as follows.

< 1 > An optical recording medium which is a transmission medium for recording information based on a holographic principle using an information beam and a reference beam and performing tracking control using a servo beam, the medium including: at least a first substrate, a recording layer, a filter layer that selectively reflects the servo beam, and a second substrate, the first substrate, recording layer, filter layer and second substrate being disposed in this order as viewed from the light irradiation side of the information beam and the reference beam.
< 2 > The optical recording medium according to the item < 1 >, wherein the filter layer is formed so as to be adjacent to the second substrate.
< 3 > The optical recording medium according to any one of the items < 1 > to < 2 >, wherein the transmittance (%) of each of the first substrate and the second substrate is at least 70%.
< 4 > The optical recording medium according to any one of the items < 1 > to < 3 >, wherein the filter layer has a dielectric deposition layer.
< 5 > The optical recording medium according to any one of the items < 1 > to < 4 >, wherein the filter layer has a coloring material-containing layer, and a dielectric deposition layer on the coloring material-containing layer.
< 6 > The optical recording medium according to any one of the items < 1 > to < 5 >, wherein the filter layer has a thickness of 0.01 μm to 100 μm.
< 7 > The optical recording medium according to any one of the items < 1 > to < 6 >, wherein the filter layer is transparent to the information beam, the reference beam, and a reproducing light.
< 8 > The optical recording medium according to the item < 7 >, wherein the information beam, the reference beam and the reproducing light respectively have a wavelength of 350 nm to 600 nm, and the servo beam has a wavelength of 600 nm to 900 nm.
< 9 > The optical recording medium according to any one of the items < 1 > to < 8 >, wherein the second substrate has a servo pit pattern.
< 10 > The optical recording medium according to any one of the items < 1 > to < 9 >, wherein the filter layer is formed on a servo pit pattern.
< 11 > The optical recording medium according to any one of the items < 1 > to < 10 >, wherein the information beam and the reference beam are irradiated to the optical recording medium so that the optical axis of the information beam is coaxial with the optical axis of the reference beam.
< 12 > The optical recording medium according to any one of the items < 1 > to < 11 >, wherein the filter layer has a coloring material-containing layer which contains at least one coloring material of a pigment and a dye, and has a cholesteric liquid crystal layer on the coloring material-containing layer.
< 13 > The optical recording medium according to any one of the items < 1 > to < 12 >, wherein the filter layer further has a dielectric deposition layer on the coloring material-containing layer.
< 14 > The optical recording medium according to any one of the items < 1 > to < 13 >, wherein the filter layer has a single cholesteric liquid crystal layer
< 15 > The optical recording medium according to any one of the items < 1 > to < 13 >, wherein the filter layer is a laminate having two or more cholesteric liquid crystal layers.
In the optical recording medium according to the item < 15 >, two or more cholesteric liquid crystal layers are formed in a laminate structure, and when the incidence angle is varied, displacement of the selective reflection wavelength arises. Therefore, noise caused by such diffused light is not overlapped on a reproduced image then to be detected

by a CMOS sensor or on CCD, and a reproduced image can be detected at least to such an extent that errors can be corrected. The greater amount of a noise component by diffused light requires greater multiplicity of the hologram. That is, the greater the multiplicity is, the smaller the diffraction efficiency is, e.g., when the multiplicity is 10 or more, a diffraction efficiency from one hologram is extremely small. When diffused noise is caused, it is extremely difficult to detect a reproduced image. The present invention makes it possible to eliminate difficulties and can realize the high density image recording which has not been achieved conventionally.

< 16 > The optical recording medium according to any one of the items < 11 > to < 15 >, wherein the selective reflection wavelength zone in the cholesteric liquid crystal layer is continuous.

< 17 > The optical recording medium according to any one of the items < 11 > to < 16 >, wherein the cholesteric liquid crystal layer contains at least a nematic liquid crystal compound and a photoreactive chiral compound.

< 18 > The optical recording medium according to any one of the items < 11 > to < 17 >, wherein each of the two or more cholesteric liquid crystal layers has circularly polarized light separating property.

< 19 > The optical recording medium according to any one of the items < 11 > to < 18 >, wherein the rotation direction of a helix in each of the two or more cholesteric liquid crystal layers is the same to each other.

< 20 > The optical recording medium according to any one of the items < 11 > to < 19 >, wherein each of the two or more cholesteric liquid crystal layers has a different selective reflection central wavelength from each other.

< 21 > The optical recording medium according to any one of the items < 11 > to < 20 >, wherein the width of the selective reflection wavelength zone in the cholesteric liquid crystal layer is 100 nm or more.

< 22 > The optical recording medium according to any one of the items < 1 > to < 21 >, used as a selective reflection film in an optical recording medium wherein the filter layer utilizes holography, thereby recording information.

< 23 > The optical recording medium according to any one of the items < 1 > to < 22 >, wherein the filter layer has a photoreactive chiral compound, the photoreactive chiral compound has a chiral site and a photoreactive group, and the chiral site is at least one selected from isosorbide compounds, isomanide compounds and binaphthol compounds.

< 24 > The optical recording medium according to the item < 23 >, wherein the photoreactive group is a group which induces isomerization from trans to cis in a carbon-carbon double bond by light irradiation.

< 25 > An optical recording method including: at least recording an interference image on a recording layer by irradiating the optical recording medium according to any one of the items < 1 > to < 24 > with an information beam and a reference beam so as to form the interference image.

< 26 > An optical recording apparatus including: at least an interference image recording unit configured to record an interference image on a recording layer by irradiating the optical recording medium according to any one of the items < 1 > to < 25 > with an information beam and a reference beam so as to form the interference image.

< 27 > An optical reproducing method including: at least reproducing recorded information corresponding to an interference image formed by the optical recording method according to the item < 25 > on a recording layer in an optical recording medium by irradiating the interference image with a reproducing light that is the same as a reference beam used in recording on the optical recording medium.

< 28 > The optical reproducing method according to the item < 27 >, wherein the interference image is irradiated with the reproducing light such that the incidence angle of the reproducing light is the same as the incidence angle of the reference beam used in recording on the optical recording medium.

The present invention can solve the prior art problems and provide an optical recording medium that is provided with a recording layer for recording information by holography, has an uncomplicated laminate structure, is capable of performing recording and reproducing control such as tracking control and capable of high-multiple recording, an optical recording method for use in the optical recording medium, an optical recording apparatus and an optical reproducing method.

Brief Description of Drawings

FIG. 1 is a view explaining one embodiment of an optical system in the periphery of an optical recording medium according to the present invention.

FIG. 2 is a graph showing reflection property of a filter layer in an optical recording medium according to the present invention with respect to wavelengths of light.

FIG. 3 is a graph showing transmission property of a filter layer in an optical recording medium according to the present invention with respect to wavelengths of light.

FIG. 4 is a view explaining recording on an optical recording medium according to the present invention using an information beam and a reference beam, and tracking on the optical recording medium using a servo beam.

FIG. 5 is a schematic cross-sectional view showing one embodiment of an optical recording medium of the present invention.

FIG. 6 is a partial cross-sectional view showing an optical recording medium of the present invention.

FIG. 7 is a perspective view showing a laminated state of an optical recording medium according to the present invention.

FIG. 8 is a block diagram showing one embodiment of the entire configuration of an optical recording and reproducing apparatus according to the present invention.

FIG. 9 is a view explaining one embodiment of an optical system in the periphery of an optical recording medium according to a conventional technique.

Best Mode for Carrying Out the Invention

(Optical Recording Medium)

The optical recording medium of the present invention is a transmission optical recording medium in which information is recorded using an information beam and a reference beam based on a holographic principle, and a tracking operation is controlled using a servo beam, and has a first substrate, a recording layer, a filter layer that selectively reflect the servo beam, and a second substrate in this order as viewed from the incident side of the information beam and the reference beam and has other layers suitably selected if necessary.

In the optical recording medium of the present invention, the filter layer is preferably formed so as to be adjacent to the second substrate.

< First Substrate and Second Substrate >

The first substrate and the second substrate are not particularly limited and may be suitably selected in accordance with the intended use, and may be, for example, same to each other or different from each other, and it is preferable that these substrate have a same shape and a same size. The shape, structure, size and the like of the substrates are not particularly limited and may be suitably selected in accordance with the intended use. For the shape, for example, a disc shape and a card shape are exemplified. There is a need to select a material that can ensure the mechanical strength of the optical recording medium. Further, when light beam used for recording and reproducing is incident through the substrate, the substrate needs to be sufficiently transparent at the wavelengths of the light beam used. The light transmittance is preferably 70% or more, more preferably 80% or more, and particularly preferably 90% or more. When the light transmittance is less than 70%, the reading accuracy of signals may degrade. A higher light transmittance is more preferable, however, when a light transmittance of 99.9% or more is sought, the production efficiency may be degraded.

For materials used for the first substrate and the second substrate, glass, ceramics, resins and the like are commonly used, and resins are particularly preferable in terms of formability and cost.

The resin is not particularly limited and may be suitably selected in accordance with the intended use. Examples thereof include thermoplastic resins, thermosetting resins, and electromagnetic wave curable resins. Examples of the thermoplastic resins include polycarbonate resins, amorphous polyolefine resins, acrylic resins, epoxy resins, polystyrene resins, acrylonitrile-styrene copolymers, polyethylene resins, polypropylene resins, silicon resins, fluorine resins, ABS resins, and urethane resins. Of these, polycarbonate resins and amorphous polyolefine resins are particularly preferable in terms of formability, optical characteristics and costs.

For the first substrate and the second substrate, suitably synthesized ones or commercially available ones may be used.

In the second substrate, address-servo areas as a plurality of positioning areas that linearly extend in a radius direction are provided at a predetermined angle interval, and a fan-shaped zone between adjacent address area and servo area is a data area. In the address-servo areas, information for performing a focus servo and a tracking servo by a sampled servo method and address information are previously recorded with emboss pits (servo pit pattern) or the like (preformatted). Note that the focus servo can be performed using a reflecting surface of a reflective film. For information for performing the focus servo, for example, wobble pits can be used. When the optical recording medium has a card shape, the servo pit pattern is not essential.

- Servo Pit Pattern -

The track pitch of the servo pit pattern is not particularly limited and may be suitably selected in accordance with the intended use. For example, when the wavelength of a servo beam is 620 nm to 700 nm, the track pitch is preferably 0.85 μm to 30 μm, more preferably 1.1 μm to 20 μm, particularly preferably 1.3 μm to 10 μm, and most

preferably 1.5 μm to 2 μm. When the track pitch is less than 0.85 μm, the tracking operation may become unstable due to light scattering on the halfway of the recording layer, and when more than 30 μm, the recording density may be lowered.

When the wavelength of the servo beam is 750 nm to 1,000 nm, the track pitch is preferably 1.7 μm to 30 μm, more preferably 1.9 μm to 20 μm, and particularly preferably 2.3 μm to 5 μm. When the track pitch is less than 1.7 μm, the tracking operation may become unstable due to light scattering on the halfway of the recording layer, and when more than 30 μm, the recording density may be lowered.

When the wavelength of the servo beam is 350 nm to 600 nm, the track pitch is preferably 0.4 μm to 30 μm, more preferably 0.6 μm to 20 μm, particularly preferably 0.8 μm to 5 μm, and most preferably 1 μm to 2 μm. When the track pitch is less than 0.4 μm, the tracking operation may become unstable due to light scattering on the halfway of the recording layer, and when more than 30 μm, the recording density may be lowered.

When the wavelength of the servo beam is near 405 nm, the track pitch is preferably 0.32 μm to 0.4 μm.

The groove depth of the servo pit pattern is not particularly limited and may be suitably selected in accordance with the intended use. For example, when the wavelength of a servo beam used is represented by "λ", the groove depth is preferably λ/(10n) to λ/(3n), where "n" represents a refractive index of a medium, corresponding to a pit area on the light incident side surface.

When the wavelength "λ" is 650 nm and "n" is 1.6, the groove depth of the servo pit pattern is preferably 41 nm to 135 nm. Generally, even when "n" somewhat varies, the groove depth is preferably 50 nm to 120 nm, more preferably 60 nm to 110 nm, and particularly preferably 80 nm to 100 nm, provided that the wavelength "λ" is 650 nm. When the wavelength is other than 650 nm, the groove depth is preferably a value commensurate with the wavelength employed. For example, when the wavelength of the servo beam is 780 nm and "n" is 1.6, the groove depth is preferably 49 nm to 163 nm. When the wavelength of the servo beam is 405 nm and "n" is 1.6, the groove depth is preferably 25 nm to 84 nm.

The groove width of the servo pit pattern is not particularly limited and may be suitably selected in accordance with the intended use. For example, the groove width of the servo pit pattern is preferably wider than those of typical CD, DVD, BD, HD and DVD. Specifically, when the wavelength of the servo beam is 650 nm, the groove width is preferably 0.25 μm to 1.05 μm, more preferably 0.35 μm to 0.95 μm, particularly preferably 0.45 μm to 0.85 μm, and most preferably 0.55 μm to 0.75 μm.

When the wavelength of the servo beam is 780 nm, the groove width is preferably 0.45 μm to 2 μm, more preferably 0.6 μm to 1.6 μm, particularly preferably 0.8 μm to 1.3 μm, and most preferably 1.0 μm to 1.1 μm.

When the wavelength of the servo beam is 405 nm, the groove width is preferably 0.2 μm to 1.0 μm, more preferably 0.25 μm to 0.8 μm, particularly preferably 0.3 μm to 0.6 μm, and most preferably 0.35 μm to 0.5 μm.

The angle of the servo pit pattern is not particularly limited and may be suitably selected in accordance with the intended use. For example, the angle is preferably 25° to 90°, more preferably 35° to 80°, particularly preferably 40° to 70°, and most preferably 45° to 60°. When the angle is 90°, the pattern is rectangular.

The thickness of the first substrate and the second substrate is not particularly limited and may be suitably selected in accordance with the intended use. The thickness is preferably 0.1 mm to 3 mm, more preferably 0.3 mm to 2 mm, and particularly preferably 0.5 mm to 1.5 mm. When the thickness of the substrate is less than 0.1 mm, distortion of the disc shape may not be prevented during storage of the disc. When the thickness is more than 3 mm, an excessive load is applied to the drive motor due to the increased weight of the whole disc, which makes it difficult to control the high-speed rotation of the drive motor.

< Recording Layer >

In the recording layer, information can be recorded by holography. For the recording layer, a material is used whose optical characteristics such as absorption coefficient and refractive index vary according to the light intensity when an electromagnetic wave (γ ray, x ray, ultraviolet ray, visible light, infrared ray, radio wave and the like) having a predetermined wavelength is irradiated to the recording layer.

Materials used for the recording layer contain a photothermal conversion material, a photosensitive resin, a binder and other components suitably selected if necessary.

- Photosensitive Resin -

The photosensitive resin is not particularly limited and may be suitably selected in accordance with the intended use, as long as it can be used in holography. For example, a photopolymer is preferable.

-- Photopolymer --

The photopolymer is not particularly limited and may be suitably selected in accordance with the intended use,

as long as it can induce a polymerization reaction by being irradiated with light. For example, the photopolymer contains a monomer and a photopolymerization initiator and further contains other components such as sensitizer and oligomer if necessary.

As the photopolymer, those described in, for example, "Photopolymer Handbook" (Kogyo Chosakai Publishing Co., Ltd., 1989), "Photopolymer Technology" (Nikkan Kogyo Shinbun, 1989), SPIE Proceedings Vol. 3010 pp. 354-372 (1997) and SPIE Proceedings Vol. 3291 pp. 89-103 (1998) can be used. Also, the photopolymers described in US Patent Nos. 5,759,721, 4,942,112, 4,959,284 and 6,221,536, U.S. Patent No. 6,743,552, International Publication Nos. WO97/44714, WO97/13183, WO99/26112 and WO97/13183, Japanese Patent (JP-B)Nos. 2880342, 2873126, 2849021, 3057082 and 3161230, Japanese Patent Application Laid-Open (JP-A) Nos. 2001-316416 and 2000-275859 can be used.

Examples of the method of irradiating the photopolymer with a recording light to change the optical characteristics include a method of utilizing diffusion of a low molecular component. In order to alleviate the volume change upon polymerization, a component which diffuses in a direction opposite to a polymerization component may be added, or a compound having an acid cleavage structure may be separately added in addition to the polymer. When the recording layer is formed using the photopolymer containing the low molecular component, a structure capable of keeping a liquid in the recording layer is sometimes required. When the compound having the acidic cleavage structure is added, the volume change may be inhibited by compensating an expansion caused by the cleavage and a shrinkage caused by the monomer polymerization.

The monomer is not particularly limited and may be suitably selected in accordance with the intended use. Examples thereof include radical polymerization type monomers having an unsaturated bond such as acryl and methacryl groups and cation polymerization type monomers having an ether structure such as epoxy and oxetane rings. These monomers may be monofunctional or multifunctional, and may also be those utilizing a photo crosslinking reaction.

Examples of the radical polymerization type monomers include acryloylmorpholine, phenoxyethyl acrylate, isobornyl acrylate, 2-hydroxypropyl acrylate, 2-ethylhexyl acrylate, 1,6-hexanediol diacrylate, tripropylene glycol diacrylate, neopentyl glycol PO modified diacrylate, 1,9-nonanediol diacrylate, hydroxypivalate neopentyl glycol diacrylate, EO modified bisphenol A diacrylate, polyethylene glycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethyl acrylate, 2-carbazoyl-9-yl-ethyl acrylate, (trimethylsilyloxy)dimethylsilylpropyl acrylate, vinyl-1-naphthoate, N-vinyl carbazole, 2,4,6-tribromphenyl acrylate, pentabromide acrylate, phenylthioethyl acrylate, and tetrahydrofulfuryl acrylate.

Examples of the cation polymerization type monomers include bisphenol A epoxy resins, phenol novolak epoxy resins, glycerol triglycidyl ether, 1,6-hexane glycidyl ether, vinyl trimethoxysilane, 4-vinylphenyl trimethoxysilane, γ-methacryloxypropyl triethoxysilane and compounds represented by the following Structural Formulas (M1) to (M6).

These monomers may be used alone or in combination of two or more.

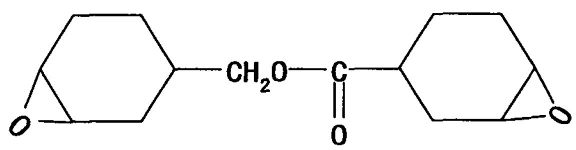

Structural Formula (M1)

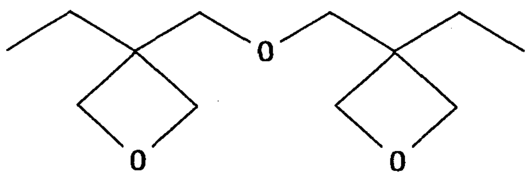

Structural Formula (M2)

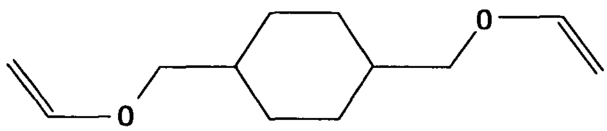

Structural Formula (M3)

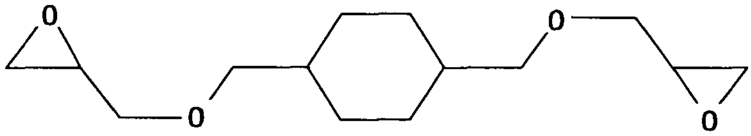

Structural Formula (M4)

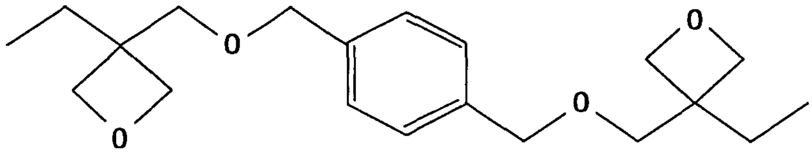

Structural Formula (M5)

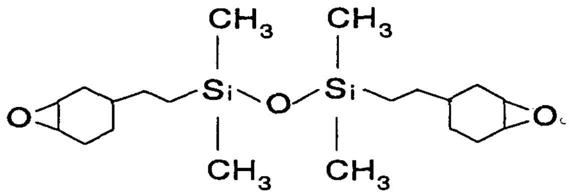

Structural Formula (M6)

The photoinitiator is not particularly limited as long as it has a sensitivity to the recording light, and examples thereof include materials which induce radical polymerization, cation polymerization or crosslinking reaction by light irradiation.

Examples of the photoinitiator include 2,2'-bis(o-chlorophenyl)-4,4',5,5'-tetraphenyl-1,1'-biimidazole, 2,4,6-tris (trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiiodonium tetrafluoroborate, 4-diethylaminophenylbenzenediazonium hexafluorophosphate, benzoin, 2-hydroxy-2-methyl-1-phenylpropane-2-one, benzophenone, thioxanthone, 2,4,6-trimethylbenzoyldiphenylacylphosphine oxide, triphenylbutyl borate tetraethyl ammonium, bis (η-5-2,4-cyclopentadiene-1-yl)bis[2,6-difluoro-3-(1H-pyrrole-1-yl) phenyltitanium], and diphenyl-4-phenylthiophenyl sulfonium hexafluorophosphate. These may be used alone or in combination of two or more. A sensitizing dye may be combined in accordance with the wavelength of the light to be irradiated.

For the purpose of enhancing the storage stability of the recording layer, a polymerization inhibitor and an antioxidant for the photopolymer may be added. Examples of the polymerization inhibitor and the antioxidant include hydroquinone, p-benzoquinone, hydroquinone monomethyl ether, 2,6-di-tertiary-butyl-p-cresol, 2,2'-methylenebis(4-methyl-6-tertiary-butylphenol), triphelphosphate, trisnonylphenyl phosphate, phenothiazine, and N-isopropyl-N'-phenyl-p-phenylene diamine. The use amount of the polymerization inhibitor and antioxidant is preferably within 3% by mass to the total content of monomers used in the materials for the recording layer. When the use amount is more than 3% by mass, the polymerization reaction decelerates or the monomer cannot be polymerized in some extreme cases.

The photopolymer is obtained by stirring and mixing the monomer, the photoinitiator and if necessary the other components to react them. If the resulting photopolymer has a sufficiently low viscosity, the recording layer can be formed by casting. Meanwhile, when the photopolymer has a high viscosity, which can not be cast, the recording layer

can be formed by placing the photopolymer on the second substrate using a dispenser and pushing the first substrate on the photopolymer as if covering with a lid to spread evenly.

Examples of usable photosensitive resins other than the photopolymers include (1) photorefractive materials exhibiting a photorefractive effect (the light irradiation produces a space charge distribution to modify the refractive index), (2) photochromic materials in which the light irradiation causes molecular isomerization to modify the refractive index, (3) inorganic materials such as lithium niobate and barium titanate, and (4) chalcogen materials.

The photoreactive material (1) is not particularly limited and may be suitably selected in accordance with the intended use, as long as it exhibits the photoreactive effect. It contains, for example, a charge generating material and a charge transporting material, and further contains the other components, if necessary.

The charge generating material is not particularly limited and may be suitably selected in accordance with the intended use. Examples thereof include phthalocyanine dyes/ pigments such as metal phthalocyanine and non-metal phthalocyanine or derivative thereof; naphthalocyanine dyes/pigments; azo based dyes/pigments such as monoazo-, diazo- and triazo-dyes/pigments; perylene based dyes/pigments; indigo based dyes/pigments; quinacridone based dyes/ pigments; polycyclic quinone based dyes/ pigments such as anthraquinone and anthoanthorone; cyanine based dyes/ pigments; charge transfer complexes composed of an electron accepting material and an electron donating material, typified by TTF-TCNQ; azulenium salts; fullerene typified by $C_{60}$ and $C_{70}$ and methanofullerene which is a derivative thereof. These charge generating materials may be used alone or in combination of two or more.

The electron transporting material is a material that transports a hole or an electron, and may be a low molecular compound or a high molecular compound.

The electron transporting material is not particularly limited, and may be suitably selected in accordance with the intended use. Examples thereof include nitrogen-containing cyclic compounds such as indole, carbazole, oxazole, inoxazole, thiazole, imidazole, pyrazole, oxadiazole, pyrazoline, thiathiazole and triazole, or derivative thereof; hydrazine compounds; triphenylamines; triphenylmethanes; butadienes; stilbenes; quinone compounds such as anthraquinone diphenoquinone, or derivatives thereof; fullerene such as $C_{60}$ and $C_{70}$ and derivatives thereof; $\pi$ conjugated polymers or oligomers such as polyacetylene, polypyrrole, polythiophene and polyaniline; $\sigma$ conjugated polymers or oligomers such as polysilane and polygermane; polycyclic aromatic compounds such as anthracene, pyrene, phenanthrene and coronene. These may be used alone or in combination of two or more.

As the method of forming the recording layer using the photoreactive material, for example, a coating film is formed using a coating solution in which the photoreactive material is dissolved or dispersed in a solvent, and the recording film can be formed by removing the solvent from this coating film. Also, the recording layer can be formed by forming a coating film using the photoreactive material that has been heated to fluidize and rapidly cooling this coating film.

The photochromic material (2) is not particularly limited and may be suitably selected in accordance with the intended use, as long as it induces a photochromic reaction. Examples thereof include azobenzene compounds, stilbene compounds, indigo compounds, thioindigo compounds, spiropyran compounds, spirooxazine compounds, fluxide compound, anthracene compounds, hydrazone compounds, cinnamate compounds, and diaryl ethane compounds. Of these, the azobenzene derivatives and the stilbene derivatives which cause the structural change due to cis-trans isomerization by light irradiation, and the spiropyran derivatives and the spirooxazine derivatives which cause the structural change of ring-opening/ring-closing by light irradiation are particularly preferable.

Examples of the chalcogen materials (4) include materials containing chalcogenide glass containing a chalcogen element and metallic particles composed of a metal dispersed in this chalcogenide glass and capable of being diffused in the chalcogenide glass by light irradiation.

The chalcogenide glass is composed of a non-oxide based amorphous material containing a chalcogen element such as S, Te or Se, and is not particularly limited as long as light dope of the metallic particles is possible.

Examples of the amorphous materials containing the chalcogen element include Ge-S based glass, As-S based glass, As-Se based glass and As-Se-Ce based glass. Of these, Ge-S based glass is preferable. When Ge-S based glass is used as the chalcogenide glass, a composition ratio of Ge and S which compose the glass can be optionally changed depending on the wavelength of the light to be irradiated, but the chalcogenide glass having a chemical composition mainly represented by $GeS_2$ is preferable.

The metallic particles are not particularly limited and may be suitably selected in accordance with the intended use, as long as they have the property to undergo light dope in the chalcogenide glass by light irradiation. Examples thereof include Al, Au, Cu, Cr, Ni, Pt, Sn, In, Pd, Ti, Fe, Ta, W, Zn and Ag. Of these, Ag, Au or Cu has a property to easily give light dope and Ag is particularly preferable because it remarkably gives light dope.

The content of the metallic particles dispersed in the chalcogenide glass is preferably 0.1% by volume to 2% by volume and more preferably 0.1% by volume to 1.0% by volume based on the total volume of the recording layer. When the content of the metallic particles is less than 0.1% by volume, a transmittance change caused by light dope is insufficient to reduce an accuracy of recording. When the content is more than 2% by volume, the light transmittance of a recording material is reduced to sometimes make it difficult to sufficiently give light dope.

- Binder -

The binder is used for the purpose of increasing the effect of improvements of coating film property, film thickness, and hologram recording properties, and is suitably selected in consideration of compatibility with the photosensitive material and photothermal conversion material.

The binder is not particularly limited and may be suitably selected in accordance with the intended use. Examples thereof include copolymers, for example, of an unsaturated acid such as (meth)acrylic acid and itaconic acid with alkyl (meth)acrylate, phenyl (meth)acrylate, benzyl (meth)acrylate, styrene or $\alpha$-methyl styrene; polymers of alkyl methacrylate typified by polymethyl methacrylate with alkyl acrylate; copolymers of alkyl (meth)acrylate with acrylonitrile, vinyl chloride, vinylidene chloride or styrene; copolymers of acrylonitrile with vinyl chloride or vinylidene chloride; cellulose modified products having a carboxyl group at the side chain thereof; polyethylene oxides; polyvinyl pyrrolidone; phenols, novolak resins obtained by a condensation reaction of o-, m-, p-cresol and/or xylenol with aldehyde or acetone; polyethers of epichlorohydrine with bisphenol A; soluble nylons; polyvinylidene chlorides; chlorinated polyolefins; copolymers of vinyl chloride with vinyl acetate; polymers of vinyl acetates; copolymers of acrylonitrile with styrene; copolymers of acrylonitrile, butadiene and styrene; polyvinylalkylether; polyvinylalkylketone; polystyrenes; polyurethanes; polyethylene terephthalate isophthalate; acetyl cellulose; acetyl propyoxy cellulose; acetyl buthoxy celluloses; nitrocellulose, celluloids; polyvinyl butyrals; epoxy resins; melamine resins; and formalin resins. Note that in the present invention, both "acrylate and methacrylate" or "any one of them" may be referred to as "(meth)acrylate".

The content of the binder in the solid content of the recording layer is not particularly limited and may be suitably selected in accordance with the intended use, for example, it is preferably 10% by mass to 95% by mass and more preferably 35% by mass to 90% by mass. When the content is less than 10% by mass, a stable interference image may not be obtained, and when the content is more than 95% by mass, desired diffraction efficiency may not obtained.

The content of the binder in the photosensitive layer is preferably 10% by mass to 95% by mass and more preferably 35% by mass to 90% by mass in the total solid content of the photosensitive layer.

- Photothermal Conversion Material -

The photothermal conversion material is not particularly limited and may be suitably selected in accordance with the intended functions and performance. Organic dyes or pigments are preferable in terms of easy handling when they are added to the recording layer with the photopolymer and their properties of causing no incident light scattering. Further, infrared absorbing dyes or pigments are preferable in terms that they do not absorb light emitted from light source used in recording and do not scatter light.

The infrared absorbing dyes or pigments are not particularly limited, may be suitably selected in accordance with the intended use, and cationic pigments, complex salts forming pigments and quinone-based neutral pigments are preferable. The maximum absorption wavelength of the infrared absorbing pigment is preferably in the range of from 600 nm to 1,000 nm, and particularly preferably in the range of from 700 nm to 900 nm.

In the materials of the recording layer prepared, the content of the infrared absorbing pigment is determined depending on the highest absorbance of a wavelength in the infrared region. The absorbance is preferably in the range of from 0.1 to 2.5, and more preferably in the range of from 0.2 to 2.0.

- Other Components -

In the present invention, for the purpose of improving photothermal conversion effect, it is preferable that nitro cellulose be further contained in the recording layer. A light absorbent absorbs near-infrared laser light and generate heat. Nitro cellulose can be decomposed by the heat generated from the light absorbent and can efficiently accelerate a polymerization reaction of a photopolymer.

The nitro cellulose can be obtained by mixing a natural cellulose refined by a common method with an acid to prepare a nitrate and introducing a part of or all nitro groups to the site of three hydroxyl groups existing a glucopyranose ring which is the constitutional unit of cellulose. The nitrification degree of the nitro cellulose is preferably 2 to 13, more preferably 10 to 12.5, and still more preferably 11 to 12.5. Note that the nitrification degree represents " % by mass" of nitrogen atoms in the nitro cellulose. When the nitrification degree is significantly high, the effect of accelerating a polymerization reaction of photopolymer is enhanced, however, the room temperature stability tends to degrade, the nitro cellulose becomes explosive to cause a danger. When the nitrification degree is significantly low, a sufficient effect of accelerating a polymerization reaction of photopolymer may not be obtained.

The polymerization degree of the nitro cellulose is preferably 20 to 200, and more preferably 25 to 150. When the polymerization degree is significantly high, the recording layer is likely to be incompletely removed. When the polymerization degree is significantly low, the film coating property of the recording layer tends to be poor. The content rate of the nitro cellulose in the recording layer is preferably 0% by mass to 80% by mass, more preferably 0.5% by

mass to 50% by mass, and particularly preferably 1% by mass to 25% by mass to the total solid components in the recording layer.

The recording layer can be preferably formed according to a know method depending on the materials used, and can be formed, for example, by deposition method, wet-process film forming method, MBE (molecular beam epitaxy) method, cluster ion beam method, molecular stacking method, LB method, printing method, transfer method or the like. Besides the method described above, the two-component urethane matrix forming method described in U.S Patent No. 6, 743,552 may be used.

Formation of the recording layer by the wet-process film forming method can be preferably carried out by using a solution (coating solution) in which materials of the recording layer are dissolved or dispersed in a solvent (applying the solution and drying the applied solution). The wet-process film forming method is not particularly limited and may be suitably selected in accordance with the intended use, and examples thereof include ink jet method, spin-coating method, kneader coating method, bar coating method, blade coating method, casting method, dipping method, and curtain coating method.

The thickness of the recording layer is not particularly limited and may be suitably selected in accordance with the intended use, and the thickness is preferably 1 μm to 1,000 μm, and more preferably 100 μm to 700 μm.

The thickness of the recording layer is 1 μm to 1,000 μm, a sufficient S/ N ratio can be obtained even when shift-multiple recording of 10-fold recording to 300-fold recording is performed, and when the thickness of the recording layer is 100 μm to 700 μm, it is advantageous in that this effect is remarkably exerted.

< Filter Layer >

It is possible to make the selective reflection wavelength of the filter layer hardly deviate even when the incidence angle is varied. By laminating the filter layer on the optical recording medium, it is possible to obtain optical recording which is excellent in high-resolution and diffraction efficiency.

The filter layer preferably has functions of passing through the information beam, reference beam and reproducing light, and reflecting servo beam. The wavelength of the information beam, reference beam and reproducing light is preferably 350 nm to 600 nm, and the wavelength of the servo beam is preferably 600 nm to 900 nm. For this end, it is preferably an optical recording medium having a structure in which a recording layer, a filter layer and a servo pit pattern are formed in this order as viewed from the optical system side.

The filter layer is preferably formed so as to be adjacent on the servo pit pattern, and preferably formed such that the surface of the filter layer has substantially same convexo-concaves as the convexo-concaves formed on the servo pit pattern after forming the filter layer. Note that an intermediate layer may be formed in between the filter layer and the servo pit pattern, provided that the convexo-concaves of the servo pit pattern is ensured. This is because the servo beam is reflected within the filter layer and track information or the like formed in the servo pit pattern is detected using the returned light.

When the surface of the filter layer does not have a substantially same convexo-concaves as the convexo-concaves formed on the servo pit pattern, a sufficient amount of returned light cannot be obtained, which may result in an insufficient signal intensity.

The thickness error and the displacement error of the convexo-concaves formed on the filter layer to the convexo-concaves formed on the servo pit pattern is preferably ±2 μm and more preferably ± 0.5 μm.

The track information can be detected by reflection of the servo beam within the filter layer, specifically, by reflection of the servo beam from the interfaces within the filter layer even when the servo beam does not directly reach the convexo-concave surface of the servo pit pattern.

Furthermore, the light transmittance of the filter layer when irradiated with light having a wavelength of 532 nm at an incidence angle of ±30° is preferably 70% or more, more preferably 80% or more, and the light reflectance of the filter layer when irradiated with light having a wavelength of 655 nm at the same incidence angle is preferably 30% or more and more preferably 40% or more.

The filter layer is not particularly limited and may be suitably selected in accordance with the intended use, and for example, is formed of a laminate composed of a dielectric deposition layer (hereinafter may be referred to as "dichroic mirror layer"), a single or multi-layered cholesteric liquid crystal layer having two or more layers, and other layers in accordance with the necessity. Further, the filter layer may have a coloring material-contained layer.

The filter layer may be directly laminated by applying over the substrate together with the recording layer. The filter may be laminated on a surface of a base such as film to prepare a filter for optical recording medium, and the filter for optical recording medium may be laminated over the substrate.

- Dielectric Deposition Layer -

The dielectric deposition layer is formed by laminating a plurality of dielectric thin films having different refractive

indexes each other, and to make the dielectric deposition layer a wavelength-selective reflective layer, it is preferable that a dielectric thin film having a high refractive index and a dielectric thin film having a low refractive index are alternately laminated in turn for multiple times, but the number of dielectric thin film types are not limited to two types, and three or more types of dielectric thin films may be used. When the coloring material containing layer is formed, the layer is formed under the dielectric deposition layer.

The number of laminated layers is preferably 2 layers to 20 layers, more preferably 2 layers to 12 layers, still more preferably 4 layers to 10 layers, and particularly preferably 6 layers to 8 layers. The number of laminated layers is more than 20, the production efficiency is degraded due to the deposition of multiple layers, and the objects and effects of the present invention may not be achieved.

The order of lamination of the dielectric thin films is not particularly limited and may be suitably selected in accordance with the intended use. For example, when an adjacent layer has a high refractive index, a film having a lower refractive index than that of the adjacent layer is first laminated. In contrast, when an adjacent layer has a low refractive index, a film having a higher refractive index than that of the adjacent layer is first laminated. As a threshold used to determine whether the refractive index is high or low, 1.8 is preferable. Note that whether the refractive index is high or low is not absolute, among materials having a high refractive index, a material having a relatively high refractive index and a material having a relatively low refractive index may exist, and these materials may be alternately used.

The material used for the dielectric thin film having a high refractive index is not particularly limited and may be suitably selected in accordance with the intended use. Examples thereof include $Sb_2O_3$, $Sb_2S_3$, $Bi_2O_3$, $CeO_2$, $CeF_3$, $HfO_2$, $La_2O3$, $Nd_2O_3$, $Pr_6O_{11}$, $Sc_2O_3$, SiO, $Ta_2O_5$, $TiO_2$, TlCl, $Y_2O_3$, ZnSe, ZnS, and $ZrO_2$. Of these, $Bi_2O_3$, $CeO_2$, CeF3, $HfO_2$, SiO, $Ta_2O_5$, $TiO_2$, $Y_2O_3$, ZnSe, ZnS and $ZrO_2$ are more preferable.

The material used for the dielectric thin film having a low refractive index is not particularly limited and may be suitably selected in accordance with the intended use. Examples thereof include $Al_2O_3$, $BiF_3$, $CaF_2$, $LaF_3$, $PbCl_2$, $PbF_2$, LiF, $MgF_2$, MgO, $NdF_3$, $SiO_2$, $Si_2O_3$, NaF, $ThO_2$, and $ThF_4$. Of these, $Al_2O_3$, $CaF_2$, $MgF_2$, MgO, $SiO_2$ and $Si_2O_3$ are more preferable.

In the material of the dielectric thin film, the atomic ratio is also not particularly limited, may be suitably selected in accordance with the intended use, and the atomic ratio can be adjusted by changing the concentration of atmosphere gas used in the film formation.

The formation method of the dielectric thin film is not particularly limited and may be suitably selected in accordance with the intended use. Example thereof include vacuum evaporation methods such as ion plating, and ion beam, physical vapor deposition method (PVD method) such as sputtering, and chemical vapor deposition method (CVD method). Of these methods, vacuum deposition method, and sputtering are more preferable.

For the sputtering, DC sputtering, which allows for a high film formation rate, is preferable. In the DC sputtering method, it is preferable to use a material having high conductivity.

Further, for the method of forming multiple layers by sputtering, there are, for example, (1) one-chamber method in which a plurality of targets are film-formed alternately or in turns with the use of one chamber, and (2) multi-chamber method in which a plurality of layers are formed continuously with the use of a plurality of chambers. Of these, the multi-chamber method is particularly preferable from the perspective of productivity and preventing contamination of materials used.

As the thickness of the dielectric thin film, it is preferably $\lambda/16$ to $\lambda$, more preferably $\lambda/8$ to $3\lambda/4$, and particularly preferably $\lambda/6$ to $3\lambda/8$, in the order of optical wavelengths $\lambda$.

- Cholesteric Liquid Crystal Layer -

The cholesteric liquid crystal layer contains at least a nematic liquid crystal compound and chiral compound and further contains other components such as a polymerizable monomer and the like.

The cholesteric liquid crystal layer may be any one of a single-layer cholesteric liquid crystal layer and a multi-layered cholesteric liquid crystal layer having two or more layers.

As the cholesteric liquid crystal layer, those having circularly polarized light separating function are preferable. The cholesteric liquid crystal layer having the circularly polarized light separating function has the selective reflection property that only light of a circularly polarized light component in which the rotation direction (clockwise or counterclockwise) of the helix in the liquid crystal is identical to a circularly polarized light direction and the wavelength corresponds to a helix pitch of the liquid crystal is reflected. By utilizing this selective reflection property of the cholesteric liquid crystal layer, only the circularly polarized light having a specific wavelength is transmitted and separated from natural light in a certain wavelength zone, and the residual light is reflected.

The light reflectance of the filter for optical recording media when irradiated with light having a wavelength of $\lambda_0$ to $\lambda_0/\cos20°$ at an incidence angle ranging from 0° to 0°± 20° (0° represents an incidence angle when light is irradiated in a perpendicular direction to the surface of the filter for optical recording media, and $\lambda_0$ represents a wavelength of irradiated light) is preferably 40% or more, and the light reflectance of the filter for optical recording media when irradiated

with light having a wavelength of $\lambda_0$ to $\lambda_0$/cos40° at an incidence angle ranging from 0° to 0° ± 40° (0° represents an incidence angle when light is irradiated in a perpendicular direction to the surface of the filter for optical recording media, and $\lambda_0$ represents a wavelength of irradiated light) is particularly preferably 40% or more. When the light reflectance of the filter for optical recording media irradiated with light having a wavelength ranging from $\lambda_0$ to $\lambda_0$/cos20° is 40% or more, in particular when the light reflectance irradiated with light having a wavelength ranging from $\lambda_0$ to $\lambda_0$/cos40° is 40% or more, the angle dependency of the reflected light irradiation intensity can be reduced, and a lens optical system used in typical optical recording media can be employed. For this end, the selective reflection wavelength of the cholesteric liquid crystal layer is preferably high.

Specifically, when a single cholesteric liquid crystal layer is used, a width of selective reflection wavelength region $\Delta\lambda$ is represented by the following Equation 1, and thus it is preferable to use liquid crystal molecules having a high value of (ne - no).

$$\Delta\lambda = 2\lambda\,(ne - no)\,/\,(ne + no) \quad \text{...... Equation 1}$$

In Equation 1, "no" represents a refractive index of a nematic liquid crystal molecule contained in the cholesteric liquid crystal layer against a normal light, "ne" represents a refractive index of the nematic liquid crystal molecule against an abnormal light, and $\lambda$ represents a central wavelength of the selective reflection.

Furthermore, as described in Japanese Patent Application Laid-Open (JP-A) No. 2004-352081, it is preferable to use a filter for optical recording media in which helix pitches are continuously changed in the thickness direction of the liquid crystal layer by using a photo-reactive chiral compound that has photo-sensitivity as a chiral compound and is capable of substantially change the helix pitch of the liquid crystal molecules by means of light and controlling the content of the photo-reactive chiral compound and the UV irradiation time.

In the case of the multi-layered cholesteric liquid crystal layer having two or more layers, it is preferable to laminate cholesteric liquid crystal layers in which the central wavelength of selective reflection differs from each other and the rotational direction of the helix of the cholesteric liquid crystal layers is substantially same to each other.

The cholesteric liquid crystal layer is not particularly limited and may be suitably selected in accordance with the intended use, as long as it satisfies the above properties. The cholesteric liquid crystal layer contains at least a nematic liquid crystal compound, and a chiral compound, contains a polymerizable monomer and further contains other components in accordance with the necessity.

-Nematic liquid crystal compound-

The nematic liquid crystal compound is characterized in that its liquid crystal phase is solidified at temperature equal to or lower than the liquid crystal transition temperature, and may be suitably selected from liquid crystal compounds, macromolecular liquid crystal compounds and polymerizable liquid crystal compounds having a refractive index anisotropy $\Delta n$ of 0.10 to 0.40 in accordance with the intended use. The nematic liquid crystal can be used as a solid phase by orientating itself using an orientated substrate that has been subjected to an orientation treatment such as rubbing during a liquid crystal state upon melting, and directly cooling it to solidify.

The nematic liquid crystal compound is not particularly limited, may be suitably selected in accordance with the intended use, and is preferably a nematic liquid crystal compound having a polymerizable group in the molecules thereof from the perspective of ensuring sufficient curability. Of these, ultraviolet (UV) ray polymerizable liquid crystals are suitable. As the UV polymerizable liquid crystal, commercially available products can be used. For example, a brand name PALIOCOLOR LC242 available from BASF, a brand name E7 available from Merck, a brand name LC-SILICON-CC3767 available from Wacker-Chem, and brand names L35, L42, L55, L59, L63, L79 and L83 available from Takasago International Corporation are exemplified.

The content of the nematic liquid crystal compound is preferably 30% by mass to 99% by mass and more preferably 50% by mass to 99% by mass relative to the total solid content mass in each of the cholesteric liquid crystal layers. When the content is less than 30% by mass, the orientation of the nematic liquid crystal compound may be sometimes insufficient.

- Chiral compound -

The chiral compound is not particularly limited, may be suitably selected from those known in the art in accordance with the intended use, and examples thereof include isomanide compounds, catechin compounds, isosorbide compounds, fenchone compounds and carbon compounds from the perspective of enhancing hue and color purity of the liquid crystal compounds. These may be used alone or in combination of two or more.

As the chiral compound, commercially available products can be used, and examples of the commercially available products include brand names S101, R811 and CB15 available from Merck, and a brand name PALIOCOLOR LC756 available from BASF.

The content of the chiral compound is preferably 0% by mass to 30% by mass and more preferably 0% by mass to 20% by mass relative to the total solid content mass in each of the cholesteric liquid crystal layers. When the content is more than 30% by mass, the orientation of the cholesteric liquid crystal layer may be sometimes insufficient.

- Polymerizable monomer -

A polymerizable monomer can also be used in combination in the cholesteric liquid crystal layer for the purpose of enhancing the degree of cure such as film strength. When the polymerizable monomer is combined, the kinking force of the liquid crystal due to light irradiation is changed (patterning) (e.g., the distribution of the wavelengths of the selective reflection is formed), subsequently, its helical structure (selective reflection property) is immobilized, and the strength of the cholesteric liquid crystal layer after being immobilized can be further enhanced. However, when the liquid crystal compound has a polymerizable group in the same molecule, it is not always necessary to add.

The polymerizable monomer is not particularly limited, may be suitably selected from those known in the art in accordance with the intended use, and examples thereof include monomers having an ethylenically unsaturated bond. Specifically, multifunctional monomers such as pentaerythritol tetraacrylate and dipentaerythritol hexaacrylate are exemplified. These may be used alone or in combination of two or more.

The amount of the polymerizable monomer to be added is preferably 0% by mass to 50% by mass and more preferably 1% by mass to 20% by mass relative to the total solid content mass in each of the cholesteric liquid crystal layers. When the additive amount is more than 50% by mass, the orientation of the cholesteric liquid crystal layer may be sometimes inhibited.

- Other components -

The other components are not particularly limited, may be suitably selected in accordance with the intended use, and examples thereof include photopolymerization initiators, sensitizers, binder resins, polymerization inhibitors, solvents, surfactants, thickeners, dyes, pigments, ultraviolet ray absorbers and gelling agents.

The photopolymerization initiators are not particularly limited, may be suitably selected from those known in the art in accordance with the intended use, and examples thereof include p-methoxyphenyl-2,4-bis(trichloromethyl)-s-triazine, 2-(p-butoxystyryl)-5-trichloromethyl 1,3,4-oxadiazol, 9-phenylacridine, 9,10-dimethylbenzfenadine, benzophenone/Michler's ketone, hexaarylbiimidazole/mercaptobenzimidazole, benzyldimethylketal, acylphosphine derivatives, and thioxanthone/amine. These may be used alone or in combination of two or more.

As the photopolymerization initiator, commercially available products can be used, and examples of the commercially available products include brand names IRGACURE 907, IRGACURE 369, IRGACURE 784 and IRGACURE 814 available from Chiba Specialty Chemicals, and LUCILIN TPO available from BASF.

The amount of the photopolymerizable initiator to be added is preferably 0.1% by mass to 20% by mass and more preferably 0.5% by mass to 5% by mass relative to the total solid content mass in each of the cholesteric liquid crystal layers. When the additive amount is less than 0.1 % by mass, a long time is sometimes required because curing efficiency upon light irradiation is low. When the additive amount is more than 20% by mass, a light transmittance at an ultraviolet ray region to a visible light region may be sometimes insufficient.

The sensitizer is added for enhancing the curing degree of the cholesteric liquid crystal layer as needed.

The sensitizer is not particularly limited, may be suitably selected from those known in the art in accordance with the intended use, and examples thereof include diethyl thioxanthone and isopropyl thioxanthone.

The amount of the sensitizer to be added is preferably 0.001 % by mass to 1.0 % by mass relative to the total solid content mass in the cholesteric liquid crystal layer.

The binder resin is not particularly limited, may be suitably selected from those known in the art in accordance with the intended use, and examples thereof include polyvinyl alcohol; polystyrene compounds such as polystyrene and poly-$\alpha$-methylstyrene; cellulose resins such as methylcellulose, ethylcellulose and acetylcellulose; acidic cellulose derivatives having carboxyl group in the side chain; acetal resins such as polyvinyl formal and polyvinyl butyral; methacrylic acid copolymers, acrylic acid copolymers, itaconic acid copolymers, crotonic acid copolymers, maleic acid copolymers, partially esterified maleic acid copolymers; homopolymers of alkyl acrylate ester or homopolymers of alkyl methacrylate ester; other polymers having hydroxyl group. These may be used alone or in combination of two or more.

Examples of the alkyl groups in the homopolymers of alkyl acrylate ester or the homopolymers of alkyl methacrylate ester include methyl, ethyl, n-propyl, n-butyl, isobutyl, n-hexyl, cyclohexyl and 2-ethylhexyl groups.

Examples of the other polymers having hydroxyl group include benzyl (meth)acrylate/(homopolymer of methacrylic acid) acrylic acid copolymers and polygenetic copolymers of benzyl (meth)acrylate/(meth)acrylic acid/another

monomer.

The amount of the binder resin to be added is preferably 0% by mass to 80% by mass and more preferably 0% by mass to 50% by mass relative to the total solid content mass in the cholesteric liquid crystal layer. When the additive amount is more than 80% by mass, the orientation of the cholesteric liquid crystal layer may be sometimes insufficient.

The polymerization inhibitor is not particularly limited, may be suitably selected in accordance with the intended use, and examples thereof include hydroquinone, hydroquinone monomethyl ether, phenothiazine, benzoquinone or derivatives thereof.

The additive amount of the polymerization inhibitor to be added is preferably 0 % by mass to 10% by mass and more preferably 100 ppm to 1% by mass relative to the solid content of the polymerizable monomer.

The solvent is not particularly limited, may be suitably selected from those known in the art in accordance with the intended use, and examples thereof include alkoxypropionate esters such as methyl 3-methoxypropionate ester, ethyl 3-methoxypropionate ester, propyl 3-methoxypropionate ester, methyl 3-ethoxypropionate ester, ethyl 3-ethoxypropionate ester and propyl 3-ethoxypropionate ester; esters of alkoxy alcohol such as 2-methoxypropyl acetate, 2-ethoxypropyl acetate and 3-methoxypropyl acetate; lactate esters such as methyl lactate and ethyl lactate; ketones such as methylethylketone, cyclohexanone and methyl cyclohexanone; γ-butylolactone, N-methyl pyrrolidone, dimethyl sulfoxide, chloroform and tetrahydrofuran. These may be used alone or in combination of two or more.

For the method of forming the cholesteric liquid crystal layer, for example, a cholesteric liquid crystal layer coating solution prepared using the solvent (in the case of a multi-layered cholesteric liquid crystal layer, coating solutions for respective cholesteric liquid crystal layers) is applied over a surface of a substrate, the applied coating solution is dried and irradiated with, for example, ultraviolet ray, thereby forming a cholesteric liquid crystal layer.

As the most suitable method for mass productivity, it is preferable that the substrate be prepared in a rolled form, and the cholesteric liquid crystal layer coating solution be applied over the substrate surface using a long, continuous coater such as a bar coater, dye coater, blade coater and a curtain coater.

Examples of the coating method include a spin coating method, a casting method, a roll coating method, a flow-coating method, a printing method, a dip-coating method, a flow-casting method, a bar coating method, and a gravure printing method.

The conditions for irradiating an ultraviolet ray are not particularly limited and may be suitably selected in accordance with the intended use. For example, the ultraviolet ray used for irradiation preferably has a wavelength of 160 nm to 380 nm, more preferably has a wavelength of 250 nm to 380 nm. The irradiation time is preferably, for example, 0.1 seconds to 600 seconds and more preferably 0.3 seconds to 300 seconds. By controlling the conditions for irradiating the ultraviolet ray, it is possible to continuously change the helix pitch of the cholesteric liquid crystal layer formed using the photo-reactive chiral compound along the thickness direction of the liquid crystal layer.

In order to control the conditions for irradiating the ultraviolet ray, an ultraviolet ray absorbing agent can also be added to the cholesteric liquid crystal layer. The ultraviolet ray absorbing agent is not particularly limited, may be suitably selected in accordance with the intended use, and preferred examples thereof include benzophenone based ultraviolet ray absorbing agents, benzotriazole based ultraviolet ray absorbing agents, salicylic acid based ultraviolet ray absorbing agents, cyanoacrylate based ultraviolet ray absorbing agents and oxalic acid anilide based ultraviolet ray absorbing agents. Specific examples of these ultraviolet ray absorbing agents are described in Japanese Patent Application Laid-Open (JP-A) Nos. 47-10537, 58-111942, 58-212844, 59-19945, 59-46646, 59-109055, 63-53544, Japanese Patent Application Publication (JP-B) Nos. 36-10466, 42-26187, 48-30492, 48-31255, 48-41572, 48-54965 and 50-10726, US Patent Nos. 2,719,086, 3,707,375, 3,754,919 and 4,220,711.

In the case of the multi-layered cholesteric liquid crystal layer, the thickness of each of the cholesteric liquid crystal layers is preferably 1 μm to 10 μm and more preferably 2 μm to 7 μm. When the thickness is less than 1 μm, the selective reflectance is insufficient, and when more than 10 μm, the even orientation in the liquid crystal layer may be sometimes disturbed. Further, the total thickness of the cholesteric liquid crystal layers (the thickness of the cholesteric liquid crystal layer in the case of a single-layered cholesteric liquid crystal layer) is preferably, for example, 1 μm to 30 μm and more preferably 3 μm to 10 μm.

< Other layers >

The other layers are not particularly limited, may be suitably selected in accordance with the intended use, and for example, an anti-reflective layer is exemplified.

- Anti-reflection layer -

The anti-reflective layer is provided on the outer surfaces of the first substrate and the second substrate in accordance with the necessity, and both the anti-reflective layers are formed for the purpose of increasing the signal

intensity of reproducing light or the like.

As a material used for the anti-reflective layer, for example, inorganic materials are exemplified.

Examples of the inorganic materials include $SiO_2$, $TiO_2$, $MgF_2$, ZnO and $Ga_2O3$.

Further, for the material of the anti-reflective layer, a commercially available coating agent can be used. Examples of the coating agent include SAITOP (manufactured by Asahi Glass Co.).

The structure of the anti-reflective layer may be a single-layer structure or a laminated structure.

The anti-reflective layer preferably has a laminated structure in which an organic material or organic materials are laminated.

The forming method of the anti-reflective layer is not particularly limited, may be suitably selected in accordance with the intended use, and examples thereof include sputtering method, and spin-coating method.

The thickness of the anti-reflective layer is not particularly limited, may be suitably selected in accordance with the intended use, for example, it is preferably 0.01 μm to 100 μm and more preferably 0.1 μm to 10 μm. When the thickness is less than 0.01 μm, the reflection preventing effect may not be sometimes obtained, and when more than 100 μm, warpage may arise at the time of forming the anti-reflective layer.

(Optical Recording Method and Optical Reproducing Method)

In the optical recording method of the present invention, the optical recording medium of the present invention is irradiated with an information beam and a reference beam to form an interference image, and the interference image is recorded on a recording layer.

In the optical reproducing method of the present invention, information is reproduced by irradiating a reproducing light that is the same as the reference beam to the interference pattern that has been recorded on the recording layer.

As described above, in the optical recording method and the optical reproducing method of the present invention, information is recorded by overlapping the information beam to which a two-dimensional intensity distribution has been given with the reference beam having nearly same intensity as in the information beam inside a photosensitive recording layer and utilizing the interference pattern formed by these beams to generate an optical characteristic distribution. Meanwhile, when the written information is read out (reproduced), only the reference beam is irradiated to the recording layer in the same arrangement as upon recording, and a reproduction beam having an intensity distribution corresponding to the optical characteristic distribution formed inside the recording layer is emitted from the recording layer.

< Information beam and reference beam >

The information beam and the reference beam are not particularly limited and may be suitably selected in accordance with the intended use. For example, a coherent laser beam emitted from a light source is preferable.

The laser beam is not particularly limited, may be suitably selected in accordance with the intended use, and examples the laser beam include a laser beam having one or more laser wavelengths selected from 350 nm to 850 nm. The wavelength range is preferably from 350 nm to 800 nm, more preferably 350 nm to 600 nm, and most preferably 500 nm to 600 nm where the center of the visible region is most easily viewed.

When the wavelength of the laser beam is less than 350 nm, it is difficult to design the optical system, and when more than 600 nm, the recording capacity may be reduced.

The light source for the laser beam is not particularly limited and may be suitably selected in accordance with the intended use. For example, solid laser beam oscillators, semi-conductor laser beam oscillators, liquid laser beam oscillators, gas laser beam oscillators are exemplified. Of these, gas laser beam oscillators and semi-conductor laser beam oscillators and the like are preferable.

The method of irradiating the information beam and the reference beam is not particularly limited and may be suitably selected in accordance with the intended use. For example, one laser beam emitted from the same light source may be split into two beams as the information beam and the reference beam, or two laser beams emitted from different light sources may be used for irradiation.

The irradiating direction of the information beam and the reference beam is not particularly limited and may be suitably selected in accordance with the intended use. For example, these beams may be irradiated so that the optical axis of the information beam is coaxial with the optical axis of the reference beam.

The information beam (object beam) and the reference beam are made to interfere with each other inside the optical recording medium, and interference fringes generated at that time is written in the optical recording medium, thereby the information is recorded.

Not that the optical recording method and the optical reproducing method according to the present invention are performed using an optical recording and reproducing apparatus according to the present invention, which will be described hereinbelow.

An optical recording and reproducing apparatus used for the optical recording method and the optical reproducing method of the present invention will be described with reference to FIG. 8.

FIG. 8 is a block diagram showing one embodiment of the entire configuration of an optical recording and reproducing apparatus according to the present invention. The optical recording and reproducing apparatus includes an optical recording apparatus and an optical reproducing apparatus. Note that the optical recording and reproducing apparatus includes an optical recording apparatus and an optical reproducing apparatus.

This optical recording and reproducing apparatus 100 is equipped with a spindle 81 to which an optical recording medium 21 is attached, a spindle motor 82 which rotates the spindle 81 and a spindle servo circuit 83 which controls the spindle motor 82 so that the rotational frequency of the optical recording medium is kept at a given value.

The optical recording and reproducing apparatus 100 is also equipped with a pickup 31 for recording information by irradiating an information beam and a reference beam for recording to the optical recording medium 21 as well as reproducing the information recorded in the optical recording medium 21 by irradiating a reproduction reference beam to the optical recording medium 21 to detect the reproduction beam, and a driving device 84 which enables this pickup 31 to move in a radius direction of the optical recording medium 21.

The optical recording and reproducing apparatus 100 is equipped with a detection circuit 85 for detecting a focus error signal FE, a tracking error signal TE and a reproduction signal RF by output signals from the pickup 31; a focus servo circuit 86 which performs focus servo by driving an actuator in the pickup 31 based on the focus error signal FE detected by this detection circuit 85 to move an objective lens (not shown in the figure) in the thickness direction of the optical recording medium 21; a tracking servo circuit 87 which performs tracking servo by driving the actuator in the pickup 31 based on the tracking error signal TE detected by the detection circuit 85 to move the objective lens in a radius direction of the optical recording medium 21; and a slide servo circuit 88 which performs slide servo by controlling the driving device 84 based on the tracking error signal TE and a command from a controller to be described later to move the pickup 31 in a radius direction of the optical recording medium 21.

The optical recording and reproducing apparatus 100 is further equipped with a signal processing circuit 89 which reproduces data recorded in the data area in the optical recording medium 21 by decoding output data from CMOS or CCD array to be described later in the pickup 31, reproduces a basic clock by reproduction signal RF from the detection circuit 85 and determines an address; a controller 90 which totally controls the optical recording and reproducing apparatus 100; and an operation unit 91 which gives various commands to the controller 90.

The controller 90 inputs a basic clock and address information output from a signal processing circuit 89 as well as controls the pickup 31, the spindle servo circuit 83 and the slide servo circuit 88. The spindle servo circuit 83 inputs the basic clock output from the signal processing circuit 89. The controller 90 has CPU (central processing unit), ROM (read only memory) and RAM (random access memory), and CPU runs programs stored in ROM to realize the functions of the controller 90 utilizing the RAM as a working area.

In an optical recording and reproducing apparatus used for the optical recording method and the optical reproducing method of the present invention, an optical recording medium according to the present invention is used. Thus, the optical recording and reproducing apparatus has an uncomplicated laminate structure, is capable of performing recording and reproducing control such as tracking control, as well as capable of achieving high-density multiple recording.

(Production method of optical recording medium)

The production method of an optical recording medium according to the present invention is not particularly limited, may be suitably selected in accordance with the intended use, and includes, for example, a composition preparation step, a recording layer laminating step, a filter layer forming step, and a laminate forming step and further includes other steps in accordance with the necessity.

< Composition preparation step >

The composition preparation step is a step in which materials used for the recording layer (hereinafter, may be referred to as "a composition for optical recording") are prepared; specifically, is a step in which a composition for optical recording containing a photopolymer composed of a monomer, a photoinitiator, a sensitizer, an oligomer, a binder and the like, and other constituents suitably selected as necessary is prepared by dissolving, dispersing in, or mixing with a solvent. As conditions for preparing the composition, for example, it is prepared under an environment of low-temperature and dried condition, for example, at a temperature of 23°C and a humidity of 10%.

< Recording layer laminating step >

The recording layer laminating step is a step of laminating on the filter layer a recording layer in which information is holographically recorded; specifically, a step of laminating the composition for optical recording prepared in the composition preparing step on the surface of the filter layer by coating or the like.

The laminating method of the recording layer is not particularly limited, may be suitably selected in accordance with the intended use, and examples thereof include lamination methods such as wet-process film-forming method and injection method. The wet-process film-forming method is a method in which a recording layer is formed by using (applying and drying) a solution (coating solution) in which the recording layer materials are dissolved or dispersed. The wet-process film-forming method is not particularly limited, may be suitably selected from among those known in the art, and examples thereof include inkjet method, spin-coating method, kneader coating method, bar coating method, blade coating method, casting method, dipping method, and curtain coating method.

The injection method is a step of injecting a recording layer solution to a gap between the first substrate and the second substrate. As shown in FIG. 7, an outer circumferential spacer 37 and an inner circumferential spacer 38 are preliminarily sandwiched and supported by a first substrate 5 and a second substrate 1 to form a disc cell, a notch is provided to a part of the outer circumferential spacer 37, and the composition for optical recording is injected into the disc cell from the notch port as the injection port.

The injection method is not particularly limited, may be suitably selected in accordance with the intended use, and examples thereof include outer circumferential method, inner circumferential method, and gap injection method.

As conditions for the injection, conditions where a temperature of 23°C, a viscosity of 330 mPa·s, a pressure of 0.5 MPa, a relative humidity of 10% and as curing time conditions, a temperature of 80°C for 40 minutes, etc. are exemplified.

The injector is not particularly limited, may be suitably selected in accordance with the intended use, and examples thereof include syringes and air-pressure dispensers.

The thickness of the recording layer is not particularly limited, may be suitably adjusted in accordance with the intended use, and it is preferably 1 μm to 1,000 μm, and more preferably 100 μm to 700 μm.

When the thickness of the recording layer is within the preferable range, a sufficient S/N ratio can be obtained even when shift multiple recording of 10 to 300 is performed. When the thickness is within the more preferable range, it is advantageous in that the effect is remarkably exerted.

- Outer circumferential spacer -

The shape of the outer circumferential spacer is not particularly limited and may be suitably selected in accordance with the intended use, as long as the outer circumference of the spacer is substantially same as the shape of the circumference of the optical recording medium. For example, quadrangular-shape, circular shape, ellipsoidal shape and polygonal shape are exemplified. Of these, circular shape is preferable.

Examples of the cross-sectional shape of the outer circumferential spacer include quadrangular shape, rectangular shape, trapezoidal shape, circular shape, and ellipsoidal shape. Of these, quadrangular shape, trapezoidal shape and rectangular shape are preferable from the perspective of an effect of giving a uniform thickness. The spacer shown in FIG. 7 is one example where the cross-sectional surface is quadrangular.

The thickness of the outer circumferential spacer is not particularly limited, may be suitably selected in accordance with the intended use, and for example, it is preferably a substantially same thickness as that of the recording layer. Specifically, the outer circumferential spacer preferably has a same thickness as the thickness of the recording layer, 1 μm to 1,000 μm.

The width of the outer circumferential spacer is not particularly limited and may be suitably selected in accordance with the intended use, as long as at least 0.5 mm is secured. For example, it is preferably 0.5 mm to 5 mm, more preferably 0.5 mm to 3 mm, and particularly preferably 0.5 mm to 2 mm. When the width is less than 0.5 mm, the holding function for making the recording layer have a uniform thickness may sometimes degrade in aspects of mechanical strength and supporting area, and when the width is more than 5 mm, holographic recording area is narrowed, and the recording capacity may be reduced.

The material used for the outer circumferential spacer is not particularly limited, both inorganic material and organic material can be used, however, the organic material is preferably used in terms of formability and cost.

Examples of the inorganic material include glass, ceramics, quarts, and silicons.

The organic material is not particularly limited, may be suitably selected in accordance with the intended use, and examples thereof include acetate resins such as triacetyl cellulose; polyester resins, polyether sulfone resins, polysulfone resins, polycarbonate resins, polyamide resins, polyimide resins, polyolefin resins, acrylic resins, polynorbornene resins, cellulose resins, polyallylate resins, polystyrene resins, polyvinyl alcohol resins, polyvinyl chloride resins, polyvinylidene chloride resins, and polyacrylic resins. These organic materials may be used alone or in combination with two or more. Of these, polycarbonate resins and acrylic resins are preferable in terms of formability, peelability and cost.

The production method of the spacer is not particularly limited, may be suitably selected in accordance with the intended use, and examples of the production method include injection molding, blow molding, compression molding, vacuum molding extrusion processing, and cut processing.

- Inner circumferential spacer -

The shape of the inner circumferential spacer is not particularly limited and may be suitably selected in accordance with the intended use, as long as the circumferential shape is substantially same as the shape of an opening provided to the optical recording medium. For example, quadrangular shape, circular shape, ellipsoidal shape, and polygonal shape are exemplified. Of these, circular shape is preferable.
The cross-sectional shape of the inner circumferential spacer is preferably the same as that of the outer circumferential spacer, and for example, quadrangular shape, rectangular shape, trapezoidal shape, circular shape and ellipsoidal shape are exemplified. Of these, quadrangular shape, trapezoidal shape and rectangular shape are preferable from the perspective of an effect of giving a uniform thickness.
The thickness of the inner circumferential spacer is required to have the same thickness as the outer circumferential spacer from the perspective of uniformity of thickness of the recording layer.
The width of the inner circumferential spacer may be the same to or may be different from the width of the outer circumferential spacer from the perspective of the holding function for making the recording layer have a uniform thickness and of securing recording area of the recording layer. The material used for the inner circumferential spacer and the production method thereof may be same to or may be different from those of the outer circumferential spacer.

< Filter layer forming step >

The filter layer forming step is a step of forming a filter layer. For example, a method is exemplified in which a coating solution for a coloring material-containing layer is applied over a substrate surface to form a coloring material-containing layer and on the coloring material-containing layer, a dielectric deposition layer is formed by sputtering.
The filter layer may be directly laminated together with the recording layer or the like on the second substrate by coating, and the filter layer may be laminated on a surface of a substrate such as film to prepare a filter for optical recording medium so that the filter for optical recording medium is laminated on the substrate.
The production method of the filter for optical recording medium is not particularly limited and may be suitably selected in accordance with the intended use.
The filter for optical recording medium is not particularly limited, may be suitably selected in accordance with the intended use, however, it is preferable that the filter for optical recording medium be processed, together with the base thereof, into a disc shape (for example, by punching) and be placed on the second substrate of the optical recording medium. When the filter for optical recording medium is used as a filter layer of the optical recording medium, it can be directly formed on the second substrate without an intermediate of a base.

< Laminate forming step >

The laminate forming step is a step in which a laminate is formed by laminating the second substrate with the recording layer and the filter layer formed on a surface thereof by the recording layer laminating step and the filter layer forming step with the first substrate, and other steps suitably selected in accordance with the necessity are included.
The laminating method is not particularly limited, may be suitably selected in accordance with the intended use, and examples thereof include a method of bonding the first substrate, the second substrate and other layers suitably selected in accordance with the necessity using an adhesive; a method of contact-bonding them without using an adhesive; and a method of laminating them in a vacuum.
In the bonding method using an adhesive, each of outer circumferences of the first substrate, the second substrate and other layers suitably selected in accordance with the necessity are fitted each other, an adhesive is applied between each of these layers, a pressure of 0.01 MPa to 0.5 MPa is applied to these layers from the outsides thereof while heating at 23°C to 100°C so as to bond these layers.
To tightly bond these layers without trapping air bubbles in the bonding, it is preferable to laminate them in a vacuum.

- Adhesive -

The adhesive is not particularly limited, may be suitably selected in accordance with the intended use, and examples thereof include acrylic adhesives, epoxy adhesives, and rubber adhesives.
Of these, acrylic adhesives and epoxy adhesives are preferable because of their excellence in transparency.
In the method of contact-bonding them without using an adhesive, it is possible to form a laminate by tightly bonding these layers with utilizing the adhesiveness inherent in each of these layers. Specifically, each of outer circumferences of the first substrate, the second substrate and other layers suitably selected in accordance with the necessity are fitted each other, a pressure of 0.01 MPa to 0.5 MPa is applied to these layers from the outsides thereof while heating

at 23°C to 100°C so as to bond these layers. To tightly bond these layers without trapping air bubbles in the tight bonding, it is preferable to laminate them in a vacuum.

< Embodiment of Optical Recording Medium >

FIG. 5 is a schematic cross-sectional view showing a layer structure of an optical recording medium according to one embodiment of the present invention. In an optical recording medium 21 according to this embodiment, a servo pit pattern 3 is formed on a second substrate 1 composed of a polycarbonate resin or glass, and a filter layer 6 is formed on the servo pit pattern 3. Note that in FIG. 5, the servo pit pattern 3 is formed on the entire surface of the second substrate 1, however, may be formed in a periodical form. Further, the height of the servo pit pattern 3 is normally 1,750 angstroms (175 nm) and is sufficiently small as compared with the thicknesses of other layers including the substrate. For the purpose of increasing signal intensities of reproducing light and the like, anti-reflective layers 7a and 7b are respectively formed on the outer surface side of the second substrate 1 and on the outer surface side of the first substrate 5.
In FIG. 5, the filter layer 6 is transparent to only green or blue light used for information beam, and reference beam for recording and reproducing, and is not transparent to light of colors other than green and blue. Thus, since a servo light used for tracking servo or the like is red light, the servo light does not pass through the filter layer 6, but is reflected to become returned light and is emitted from an entering and exiting surface A.
The filter layer 6 may be a laminate in which seven layers of dielectric thin layers having a different refractive index each other are formed in a laminate structure and may be a multi-layered cholesteric liquid crystal layer in which helix pitches are continuously changed in the thickness direction of the liquid crystal layer.
The filter layer 6 formed in a laminate that is composed of the coloring material-containing layer and a dielectric deposition film may be directly formed on the servo pit pattern 3 by coating and deposition, or as the filter layer 6, a film with a coloring material-containing layer and a dielectric deposition film formed on a base surface may be punched into a shape of an optical recording medium so as to be placed on the substrate surface. As shown in FIG. 2, by using, as the filter layer, a combination of a coloring material-containing layer and a dielectric deposition film, the reflectance of the filter layer is 90% or more when light having a wavelength of 650 nm is irradiated at an incidence angle of 30°, and as shown in FIG. 3, the reflectance of the filter layer is 90% or more when light having a wavelength of 532 nm is irradiated at an incidence angle of 30°.
The filter layer 6 composed of the cholesteric liquid crystal layer may be composed, for example, of three-layered cholesteric liquid crystal layer 6a, 6b, and 6c, in which the helix pitches are continuously changed in the thickness direction of the liquid crystal layer and the three-layered cholesteric liquid crystal layer may be directly formed on the servo pit pattern 3 by coating, or as the filter layer 6, a film with a cholesteric liquid crystal layer formed on a base surface may be punched into a shape of an optical recording medium so as to be placed on the substrate surface. The use of three-layered cholesteric liquid crystal layer in which the helix pitches are continuously changed in the thickness direction of the liquid crystal layer makes it possible to obtain a similar effect to that of a filter layer composed of a coloring material-containing layer and a dielectric deposition film. Thus, the three-layered cholesteric liquid crystal layer has optical characteristics of the light reflectances as shown in FIG. 2 and the light transmittances as shown in FIG. 3.
The optical recording medium 21 in the embodiment may be in a disc shape or a card shape. When formed in a card shape, the servo pit pattern is not necessarily provided. In the optical recording medium 21, the second substrate 1 has a thickness of 0.6 mm, the filter layer 6 has a thickness of 2 μm to 3 μm, the recording layer 4 has a thickness of 0.6 mm, the first substrate 5 has a thickness of 0.6 mm, totaling about 1.8 mm in thickness.
Next, optical behaviors in the periphery of an optical recording medium 21 will be described with reference to FIG.1. Firstly, a servo beam (red light) emitted from a servo laser is reflected at almost 100% at the surface of a dichroic mirror 13 to pass through an object lens 12. The servo beam is irradiated to the optical recording medium 21 so that a focus is formed inside a filter layer 6 by the object lens 12. That is, the dichroic mirror 13 is configured to transmit light having wavelengths of green and blue light and reflect light having wavelengths of red light at almost 100%. The servo beam entered from a light entering and exiting surface A of the optical recording medium 21 passes through a first substrate 5 and a recording layer 4, is reflected inside a filter layer 6, passes again through the first substrate 5 and the recording layer 4 and exits from the entering and exiting surface A. The outgoing return light passes through the object lens 12, is reflected at almost 100% at the surface of the dichroic mirror 13, and is incident on a servo information detector by a half mirror 115, thereby servo information can be detected. Note that the return light may be incident on the servo information detector 114 using a polarizing beam splitter without an intermediate of the half mirror 115. The detected servo information is used for focus servo, tracking servo, slide servo and the like. The holographic material constituting the recording layer 4 is not photosensitive with respect to red light, hence, even when a servo beam passes through the recording layer 4 or the servo beam reflects diffusely at the filter layer 6, the recording layer 4 is not affected thereby. Further, it is designed that the return light of the servo light by the filter layer is reflected at almost 100% at the dichroic mirror 13. Thus, the servo light does not affect other equipment such as CMOS sensor or CCD for detecting a reproduced image, and does not become noise for the reproduction beam.

The information beam and the reference beam generated from the laser for recording/reproducing pass through the dichroic mirror 13 and are irradiated to the optical recording medium 21 so as to generate an interference pattern inside the recording layer 4 by the object lens 12. The information beam and the reference beam enter from the entering and exiting surface A and interfere with each other in the recording layer 4 to generate the interference pattern there (see FIG. 4). Subsequently, the information beam and the reference beam for recording pass through the recording layer 4, enter in the filter layer 6 and the second substrate, and exits the optical recording medium. The outgoing information beam and reference beam enter the detector to thereby detect information on reproduction. Note that the reference beam may be entered from other optical system.

Examples

Hereinafter, the present invention will be further described with reference to Examples according to the present invention, however, the present invention is not limited the disclosed Examples.

(Example 1)

< Preparation of Optical Recording Medium >

An optical recording medium of Example 1 was prepared as follows such that a first substrate, a recording layer, a filter layer and a second substrate were formed in this order in a laminate structure. The filter layer was formed and laminated on the second substrate by sputtering according to the following forming method of a dielectric deposition filter.

- Simulation of film-thickness structure of dielectric deposition layer and reflection characteristics thereof -

Subsequently, the film-thickness structure and reflection characteristics of a dielectric deposition layer using optical thin-film calculation software (brand name: TFCalc, manufactured by Software Spectra Co.) under the following calculation conditions.

< Calculation Conditions >

- For refractive indexes of $TiO_2$ and $SiO_2$, data base values based on TFCalc were used.
- The thickness was optimized so that the reflectance at a wavelength of 650 nm and the transmittance at a wavelength of 532 nm were respectively improved.
- The refractive index of a medium used was determined to 1.52.
- The optical characteristics were calculated by using a recording light having a wavelength of 532 nm and tracking light having a wavelength of 650 nm.

< Nine-layer laminate >

Nine layers of dielectric thin film were formed in a laminate structure, and the results of the simulation were shown in Table 1.

Table 1

| | Material | Thickness (nm) |
|---|---|---|
| 9th layer as viewed from light irradiation side | $TiO_2$ | 78.6 |
| 8th layer as viewed from light irradiation side | $SiO_2$ | 126.1 |
| 7th layer as viewed from light irradiation side | $TiO_2$ | 78.6 |
| 6th layer as viewed from light irradiation side | $SiO_2$ | 126.1 |
| 5th layer as viewed from light irradiation side | $TiO_2$ | 78.6 |
| 4th layer as viewed from light irradiation side | $SiO_2$ | 126.1 |
| 3rd layer as viewed from light irradiation side | $TiO_2$ | 78.6 |

(continued)

| | Material | Thickness (nm) |
|---|---|---|
| 2nd layer as viewed from light irradiation side | $SiO_2$ | 126.1 |
| 1st layer as viewed from light irradiation side | $TiO_2$ | 78.6 |

The simulation results showed that in the case of lamination of nine layers of dielectric thin film, the reflectance of light having a wavelength of 650 nm was 96.9% when emitted at an incidence angle of 0°C, and the reflectance of light having a wavelength of 535 nm was 91.6% when emitted at an incidence angle of 0°C. As a result, it was possible to obtain practically usable reflection characteristics.

- Formation of dielectric deposition filter -

Firstly, a film was prepared in which dipentaerithritol hexaacrylate (manufactured by Nippon Kayaku Co., Ltd.) had been applied over a surface of a triacetyl cellulose film of 100 μm in thickness (FUJITACK 12/3, manufactured by FUJIFILM Corporation) so as to have a thickness of 0.5 μm.

Next, on the film, a nine-layered filter for optical recording medium was formed on the second substrate using a sputtering apparatus (CUBE, manufactured by Unaxis Co.) employing multi-chamber method.

As to the obtained filter for optical recording medium, light reflection characteristics were measured using a spectroreflectometer (as the light source, L-5662 manufactured by Hamamatsu Photonics K.K. was used, and as a photo-multi-channel analyzer, PMA-11 manufactured by Hamamatsu Photonics K.K. was used).

As a result, it was recognized that the filter layer of Example 1 was capable, as shown in FIG. 2, of reflecting 90% or more of a light having a selective wavelength of 650 nm with respect to lights entered at an incidence angle of ± 30°.

- First substrate -

As the first substrate, a polycarbonate resin plate of 120 nm in diameter and 0.5 mm in plate thickness was used. The first substrate had a smooth surface, without having convexo-concaves such as a servo pit pattern.

- Second substrate -

As the second substrate, a polycarbonate resin substrate formed by injection molding so as to have a diameter of 120 mm and a plate thickness of 1.2 mm was used. Over the entire surface of this substrate, a servo pit pattern was formed so as to have a track pitch of 1.5 μm, a groove depth of 100 nm and a pit length of 1 μm.

- Outer circumferential spacer-

The outer circumferential spacer had a circular shape with a diameter of 120 mm, the same diameter as those of the outer shape of the first and second substrates, a width in the planar direction of 0.5 mm ± 100 μm and a thickness of 600 μm, the same thickness as that of the recording layer 4. That is, the outer circumferential spacer had a cross-section of a quadrangular shape of 0.5 mm × 600 μm.

For the material of the outer circumferential spacer, polycarbonate, having excellence in formability and mechanical strength, was used and processed with a laser.

- Inner circumferential spacer -

The inner circumferential spacer had a circular shape with a diameter of 15 mm, the same diameter as those of the openings of the first and second substrates as shown in FIG. 7, a width in the planar direction of 0.5 mm ± 100 μm and a thickness of 600 μm, the same thickness as that of the recording layer 4. That is, the inner circumferential spacer had a cross-section of a quadrangular shape of 0.5 mm × 600 μm, which was the same shape as the cross-sectional shape of the outer circumferential spacer.

For the material of the inner circumferential spacer, same polycarbonate as used for the outer circumferential spacer, having excellence in formability and mechanical strength, was used and processed with a laser.

On the surface of the filter layer 6, an obtained outer circumferential spacer 37 was bonded such that outer circumferences of the second substrate 1 and the outer circumferential spacer 37 were fitted each other, and further, an inner circumferential spacer 38 was bonded such that the center of the inner circumferential spacer 38 was fitted to the center of the second substrate 1. For the adhesive, a UV adhesive (type: SD-640, manufactured by Dainippon Ink

and Chemicals, Inc.) and a UV ray was irradiated to bond these spacers.

Into a groove with a groove depth of 600 μm, which was formed by the outer circumferential spacer 37 and the inner circumferential spacer 38, a prepared coating solution for optical recording layer composition was injected using a syringe by the injection method.

Conditions for the injection were set as a temperature: 23°C, a viscosity of solution: 300 mPas and a humidity: 50%.

After injection of the coating solution for optical recording layer composition, the optical recording layer composition was cured under the conditions of a temperature of 80°C and a curing time for 40 minutes to thereby form a recording layer 4. The recording layer had a thickness of 600 μm.

Over the surface of the recording layer 4, an adhesive (type: GM-9002, manufactured by Blenny Co.) was applied, the outside surfaces of the first substrate and the second substrate were pressurized at a pressure of 0.08 MPa, at 80°C for 40 minutes to form a laminate, finally, the ends of the laminate were sealed with a moisture-curable adhesive, and the laminated was left intact at 45°C for 24 hours, thereby preparing an optical recording medium that was substantially same as the optical recording media 21 shown in FIGS. 6 and 7.

- Recording on Optical Recording Medium -

The obtained optical recording medium was irradiated with an information beam and a reference beam using a colinear hologram recording/reproducing tester, SHOT-2000 manufactured by PULSTEC INDUSTRIAL CO., LTD. to record information of a series of a multiple hologram of 7 × 7 (49 in multiple unit) on the recording layer of the optical recording medium as an interference image within a recording spot size of a diameter of 200 μm at a focal point of the hologram to be recorded.

< Reproducing recorded interference image >

As shown in FIG.1, a reproducing light that was the same as the reference beam was irradiated to the optical recording medium 21, in which the holographic interference image had been written, from the same direction as the irradiating direction of the reference beam to generate diffracted lights from the recorded interference image, and the diffracted lights were reflected at the surface of a dichroic mirror 13 to detect the reflected lights by a detector 14.

In the optical reproducing method used in Example 1, the reproduced image by the detector 14 was an excellent image with no error (number of errors/frame).

The optical recording method of the present invention can be preferably used in a high-density recording medium that is provided with a recording layer for recording information by holography, has an uncomplicated laminate structure, is capable of performing recording and reproducing control such as tracking control and is capable of high-density multiple recording. The optical recording method can be used for any of a relatively thin plane hologram in which two-dimensional information is recorded, a volume hologram in which a large amount of information such as three-dimensional images is recorded, a transmission type hologram, and a reflection type hologram. Further, the optical recording method can be widely used as a method of reproducing various holograms such as amplitude hologram, phase hologram, brazed hologram and complex amplitude hologram, and is specifically used in CDs, DVDs, BDs, HDs, magnetic tapes, computer-backup tapes and broadcasting tapes and the like.

## Claims

1. An optical recording medium which is a transmission medium for recording information based on a holographic principle using an information beam and a reference beam and performing tracking control using a servo beam, the medium comprising:

   a first substrate,
   a recording layer,
   a filter layer that selectively reflects the servo beam, and
   a second substrate,
   the first substrate, recording layer, filter layer and second substrate being disposed in this order as viewed from the light irradiation side of the information beam and the reference beam.

2. The optical recording medium according to claim 1, wherein the filter layer is formed so as to be adjacent to the second substrate.

3. The optical recording medium according to any one of claims 1 to 2, wherein the transmittance (%) of each of the first substrate and the second substrate is at least 70%.

4. The optical recording medium according to any one of claims 1 to 3, wherein the filter layer has a dielectric deposition layer.

5. The optical recording medium according to any one of claims 1 to 4, wherein the filter layer has a coloring material-containing layer, and a dielectric deposition layer on the coloring material-containing layer.

6. The optical recording medium according to any one of claims 1 to 5, wherein the filter layer has a thickness of 0.01 μm to 100 μm.

7. The optical recording medium according to any one of claims 1 to 6, wherein the filter layer is transparent to the information beam, the reference beam, and a reproducing light.

8. The optical recording medium according to claim 7, wherein the information beam, the reference beam and the reproducing light respectively have a wavelength of 350 nm to 600 nm, and the servo beam has a wavelength of 600 nm to 900 nm.

9. The optical recording medium according to any one of claims 1 to 8, wherein the second substrate comprises a servo pit pattern.

10. The optical recording medium according to any one of claims 1 to 9, wherein the filter layer is formed on a servo pit pattern.

11. The optical recording medium according to any one of claims 1 to 10, wherein the information beam and the reference beam are irradiated to the optical recording medium so that the optical axis of the information beam is coaxial with the optical axis of the reference beam.

12. An optical recording method comprising:

recording an interference image on a recording layer by irradiating the optical recording medium according to any one of claims 1 to 11 with an information beam and a reference beam so as to form the interference image.

13. An optical recording apparatus comprising:

an interference image recording unit configured to record an interference image on a recording layer by irradiating the optical recording medium according to any one of claims 1 to 11 with an information beam and a reference beam so as to form the interference image.

14. An optical reproducing method comprising:

reproducing recorded information corresponding to an interference image formed by the optical recording method according to claim 12 on a recording layer in an optical recording medium by irradiating the interference image with a reproducing light that is the same as a reference beam used in recording on the optical recording medium.

15. The optical reproducing method according to claim 14, wherein the interference image is irradiated with the reproducing light such that the incidence angle of the reproducing light is the same as the incidence angle of the reference beam used in recording on the optical recording medium.

FIG. 1

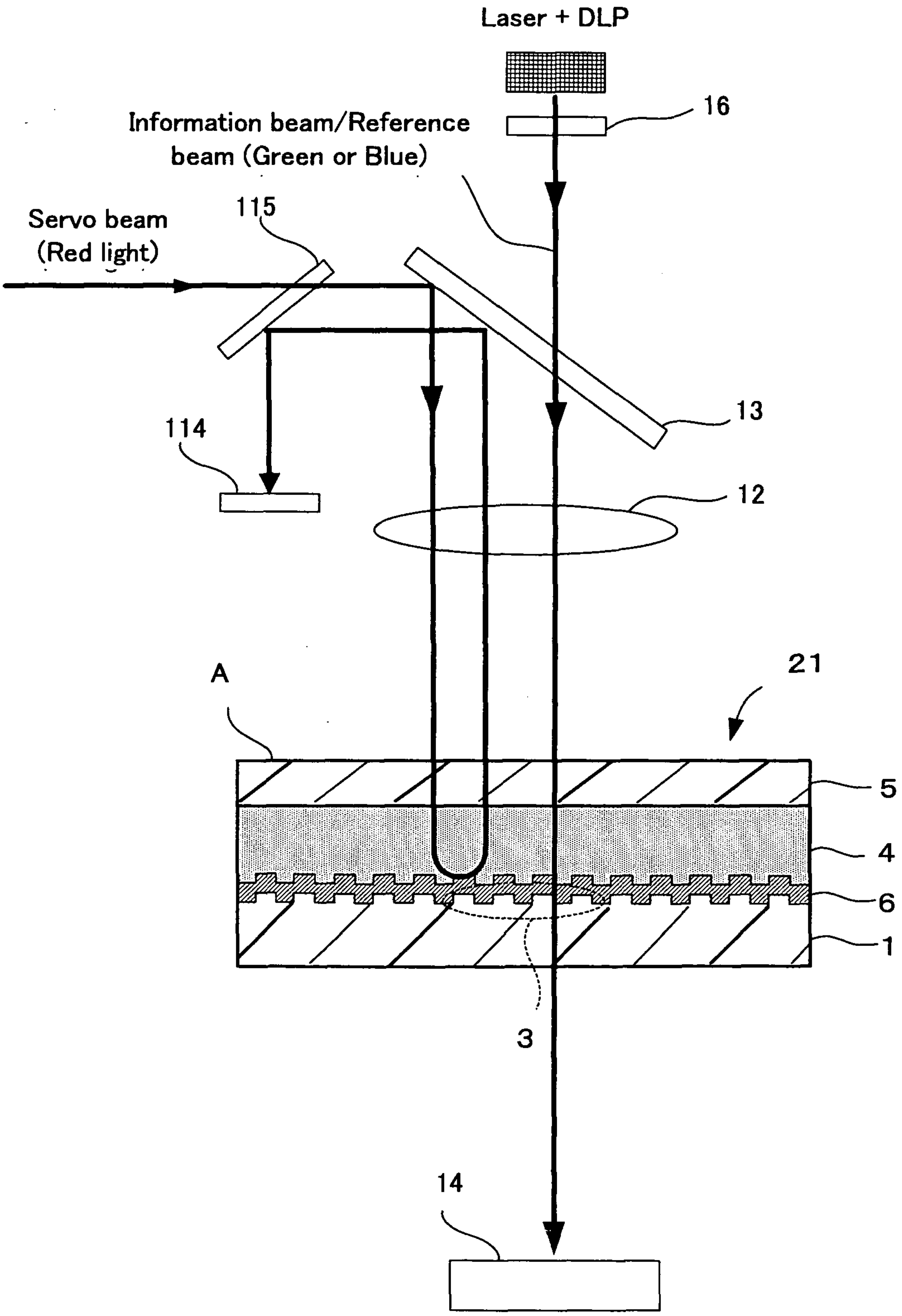
Laser + DLP
16
Information beam/Reference beam (Green or Blue)
Servo beam (Red light)
115
13
114
12
A
21
5
4
6
1
3
14

FIG. 2

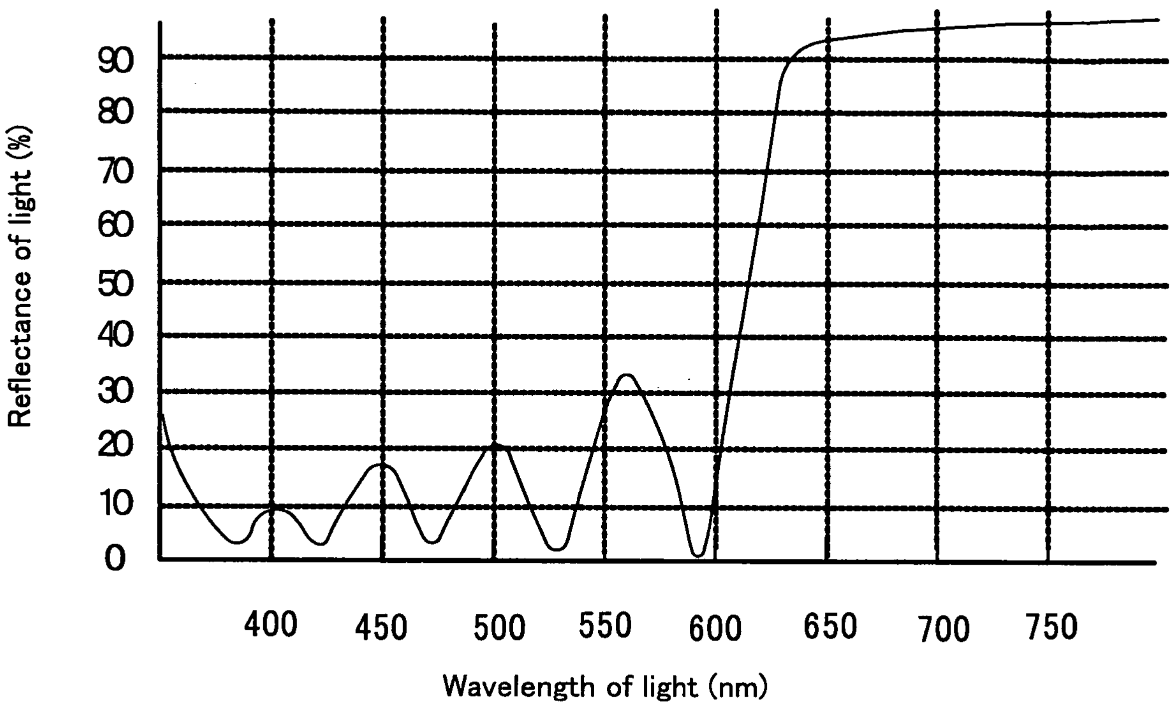
Reflectance of light (%)
90
80
70
60
50
40
30
20
10
0
400
450
500
550
600
650
700
750
Wavelength of light (nm)

FIG. 3

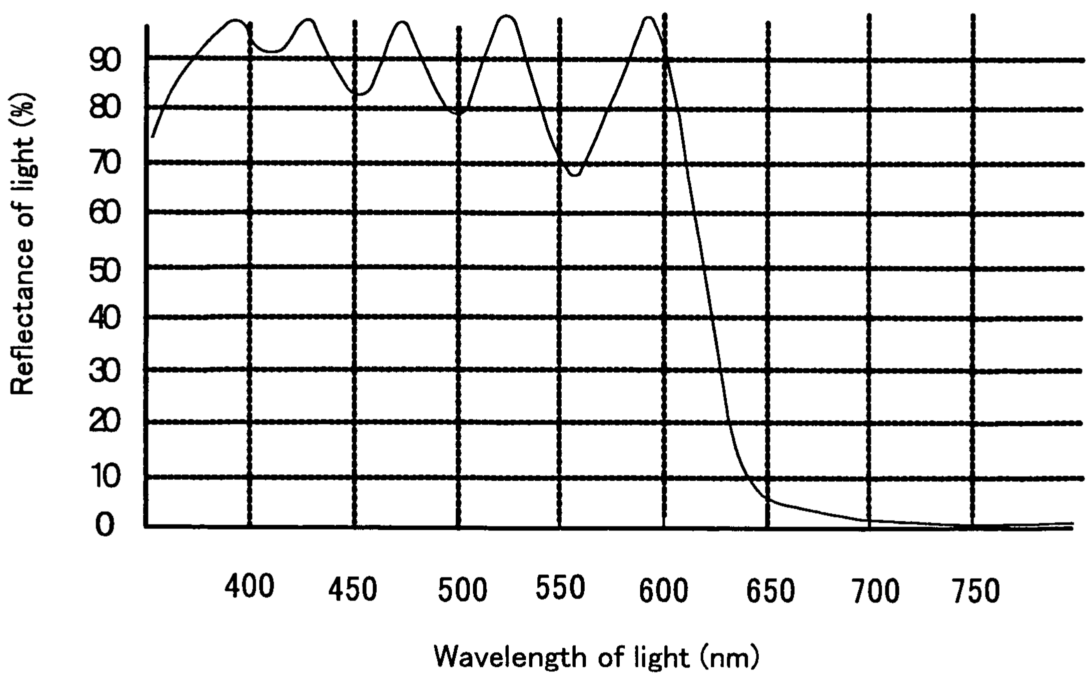
Reflectance of light (%)
90
80
70
60
50
40
30
20
10
0
400
450
500
550
600
650
700
750
Wavelength of light (nm)

FIG. 4

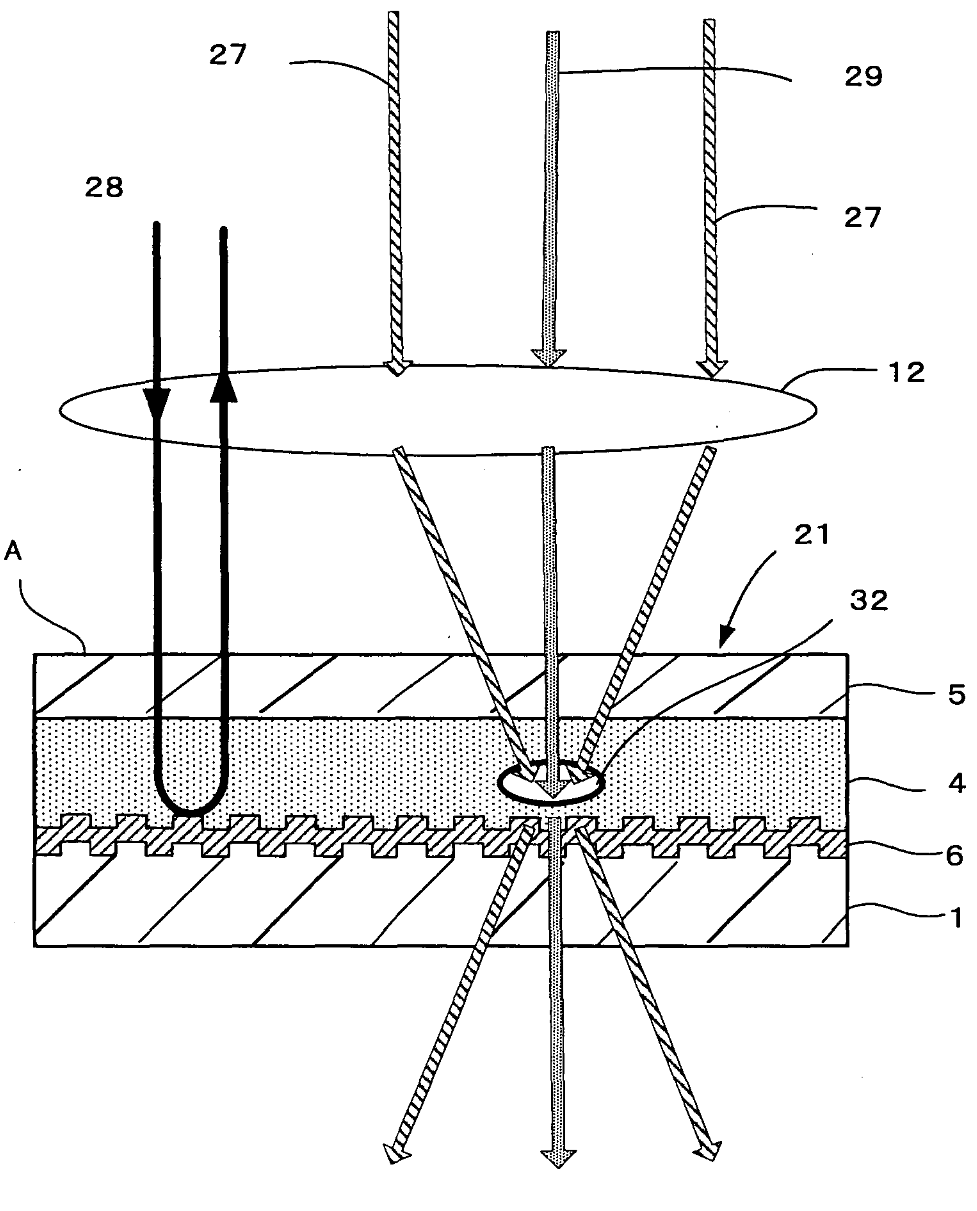

FIG. 5

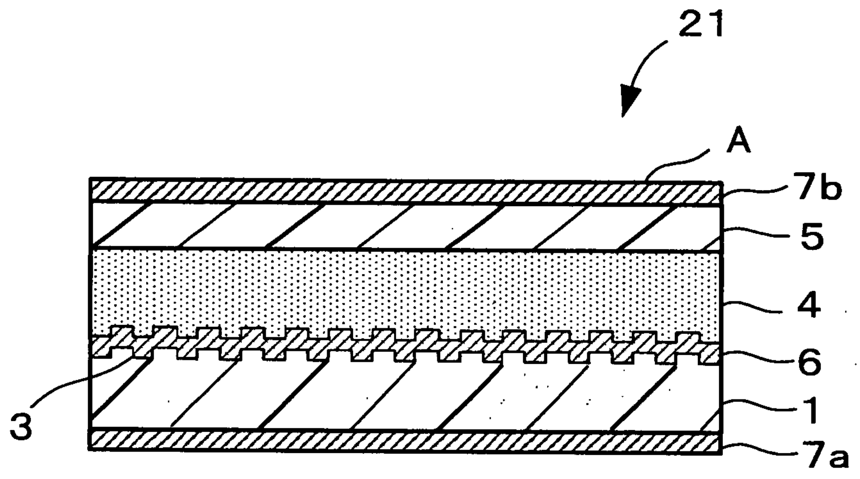


FIG. 6

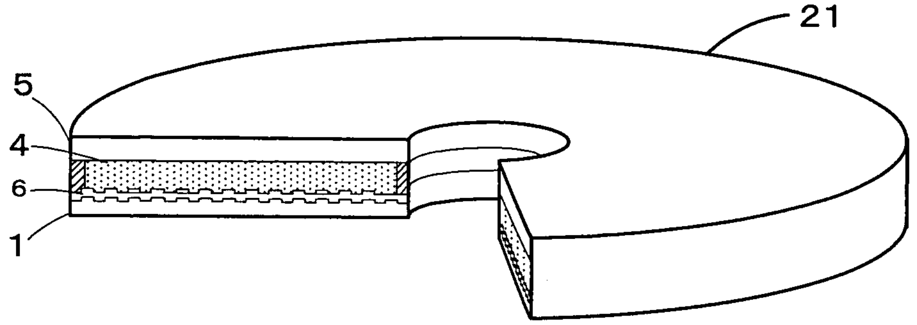

FIG. 7

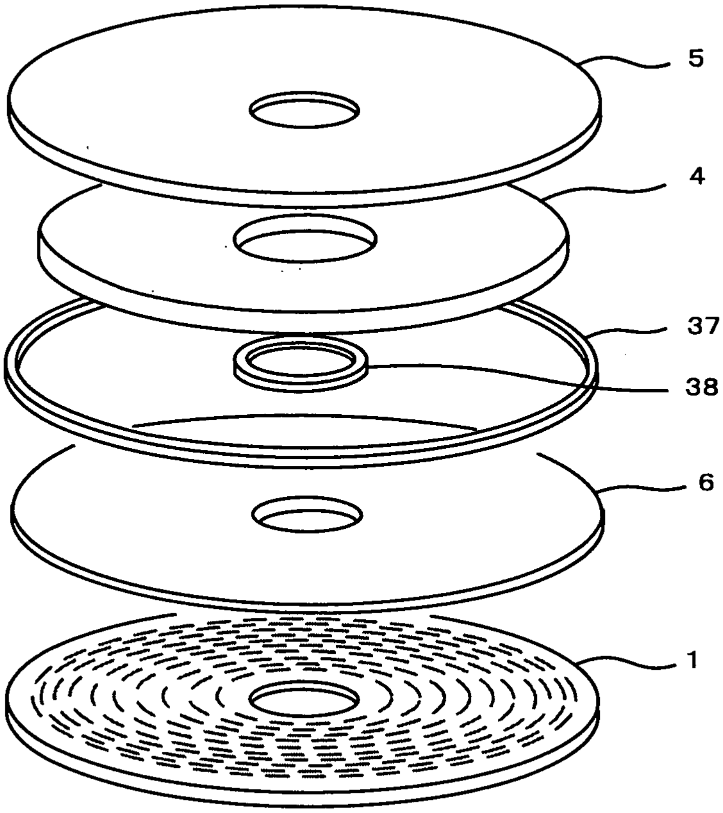

FIG. 8

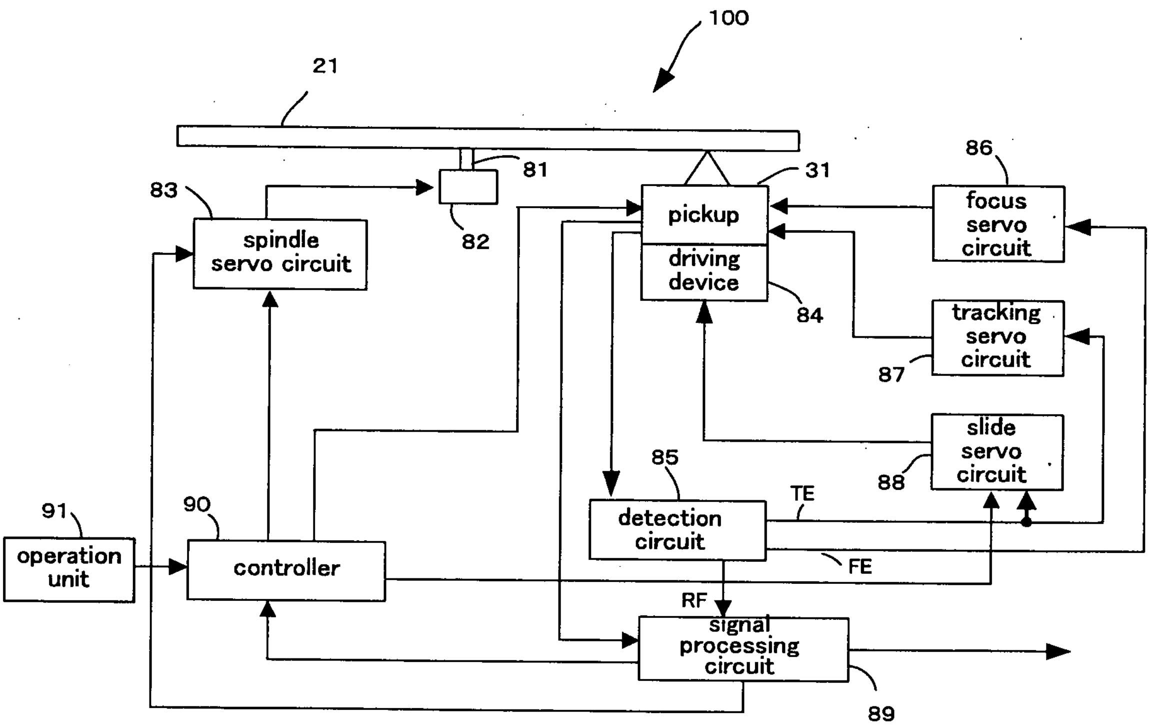
100
21
81
31
86
83
82
pickup
driving device
focus servo circuit
spindle servo circuit
84
tracking servo circuit
87
slide servo circuit
85
88
TE
91
90
detection circuit
operation unit
controller
FE
RF
signal processing circuit
89

# FIG. 9

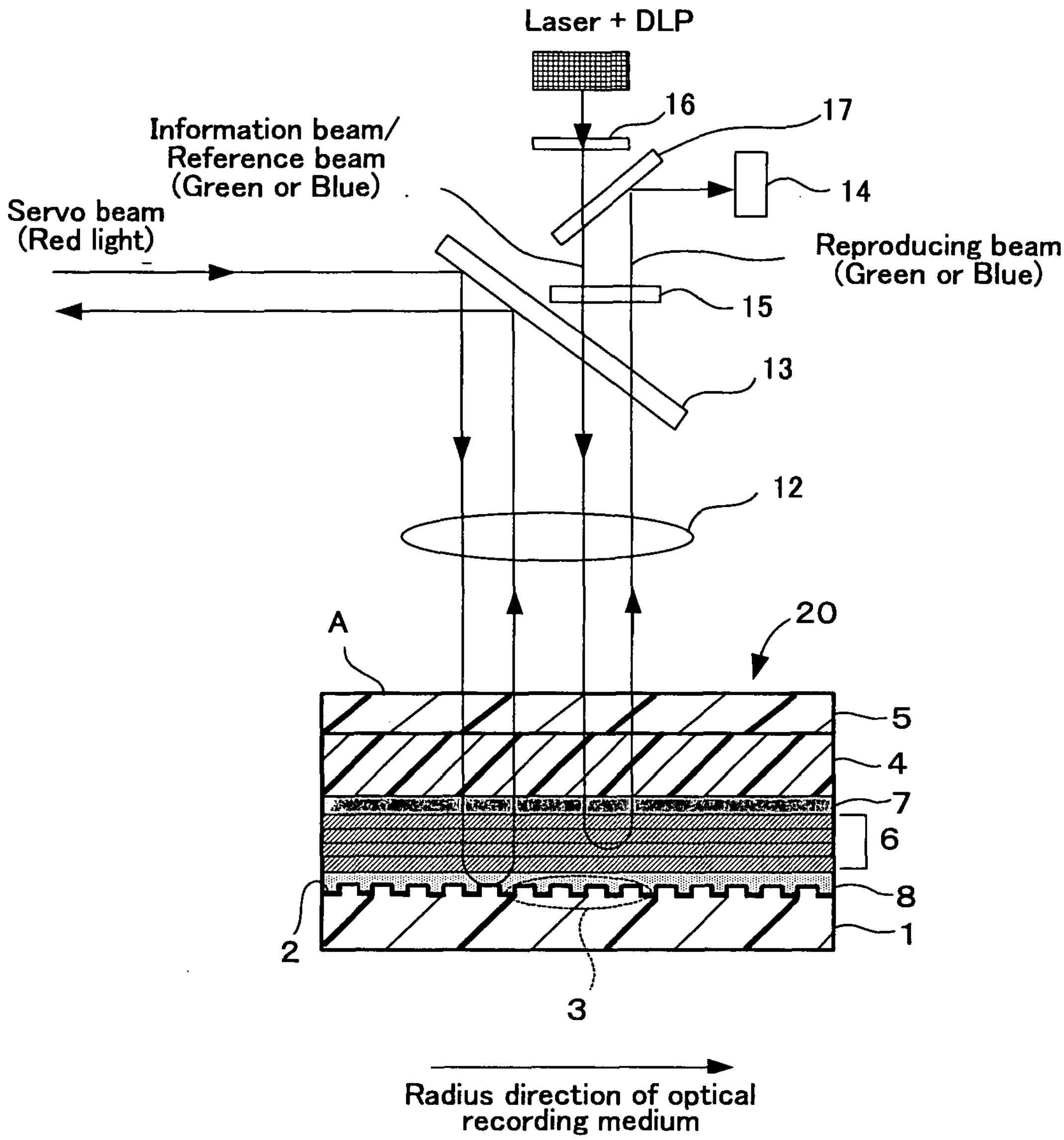


Prior Art

**INTERNATIONAL SEARCH REPORT**

International application No.
PCT/JP2006/325423

A. CLASSIFICATION OF SUBJECT MATTER
*G03H1/02*(2006.01)i, *G03H1/22*(2006.01)i, *G11B7/0065*(2006.01)i, *G11B7/24*(2006.01)i

According to International Patent Classification (IPC) or to both national classification and IPC

B. FIELDS SEARCHED

Minimum documentation searched (classification system followed by classification symbols)
G03H1/02, G03H1/22, G03H1/26, G11B7/0065, G11B7/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-316006 A (Sony Corp.), 10 November, 2005 (10.11.05), Claims 1 to 3; Figs. 2, 3 to 4 (Family: none) | 1-15 |
| Y | JP 2004-326897 A (TDK Corp.), 18 November, 2004 (18.11.04), Par. Nos. [0022] to [0033] (Family: none) | 1-15 |
| Y | JP 2005-71557 A (TDK Corp.), 17 March, 2005 (17.03.05), Front page; Claim 1 (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 March, 2007 (26.03.07) | Date of mailing of the international search report<br>03 April, 2007 (03.04.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/325423

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-63733 A (Nippon Telegraph And Telephone Corp.), 28 February, 2002 (28.02.02), Par. Nos. [0024], [0050]; Fig. 2 (Family: none) | 1-15 |
| A | JP 2004-279942 A (Toshiba Corp.), 07 October, 2004 (07.10.04), Claims 1, 4 (Family: none) | 1-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP 2004177958 A
- JP 2005502918 A
- US 5759721 A
- US 4942112 A
- US 4959284 A
- US 6221536 B
- US 6743552 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A
- JP 2004352081 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A


### Non-patent literature cited in the description


- *Nikkei Electronics,* 17 January 2005, 105-114
- Photopolymer Handbook. Kogyo Chosakai Publishing Co., Ltd, 1989
- *Photopolymer Technology,* 1989
- *SPIE Proceedings,* 1997, vol. 3010, 354-372
- *SPIE Proceedings,* 1998, vol. 3291, 89-103